# EUROPEAN PATENT SPECIFICATION

(11) **EP 3 938 295 B1**
(45) Date of publication and mention of the grant of the patent: **21.12.2022**
(21) Application number: 20714140.9
(22) Date of filing: 11.03.2020
(51) Int. Cl.: B65G 1/00, B65G 59/00

(54) **DEVICE FOR REPLACING A PALLET SUPPORTING A LOAD WITH THE POSSIBILITY OF KEEPING THIS PALLET RAISED**
VORRICHTUNG ZUM AUSWECHSELN EINER PALETTE, DIE EINE LAST TRÄGT, MIT DER MÖGLICHKEIT, DASS DIE PALETTE ANGEHOBEN BLEIBT
DISPOSITIF DE REMPLACEMENT D'UNE PALETTE SOUTENIR UNE CHARGE PRÉSENTANT LA POSSIBILITÉ DE MAINTENIR DE CETTE PALETTE RELEVÉE

(30) Priority: 12.03.2019 IT 201900000823 U
(43) Date of publication of application: 19.01.2022
(73) Proprietor: Toppy S.r.l., 40053 Valsamoggia (BO) (IT)
(72) Inventor: PIANI, Daniele, 40050 Monte San Pietro (BO) (IT)
(74) Representative: Negrini, Elena
(86) International application number: PCT/EP2020/056510
(87) International publication number: WO 2020/182888

(56) References cited:
- WO-A1-2014/067014
- CN-Y- 201 284 149
- US-A- 4 015 732

## Description

### TECHNICAL FIELD

The present invention relates to the technical field concerning handling and management of elements and packaging and refers to a device for replacing a pallet supporting a load with the possibility of keeping raised this pallet, with the respective load. Said capability is provided by removable members for keeping a pallet raised while a second pallet replaces it by pushing it.

By way of non-limiting example, here and below, reference is made to a first pallet supporting a load consisting, for example, of boxes containing goods or products and to a second pallet of the same type or of a different type of the first, for example the second has a higher height and must replace the first pallet by pushing it and inserting itself under said load. The first pallet is indicated also as original pallet or pallet to be replaced and the second pallet is also indicated as replacing pallet. The term pallet indicates each kind of mobile support for goods or boxes irrespective of the dimensions, standards, materials and features of said support.

### BACKGROUND ART

In the logistic management of goods, for example of the type in which the goods or products are contained in boxes which are arranged in ordered groups on pallets or paddles (hereinafter referred to as pallets) carrying out the palletisation of such boxed goods, it can be useful or essential to transfer the boxes that make up the load of an original pallet to another replacing pallet. One possibility of manually carrying out this operation involves to place a replacing pallet alongside the original pallet on which the boxes making the respective load are arranged, and provides for moving the boxes of the load one by one, placing them on the replacing pallet carrying out the palletised load again, where the lower boxes were the highest and where such boxes are supported by the replacing pallet. To avoid the temporal, economic and safety risks of this proceeding way, machines are used with a slide member assigned to be placed on a floor or surface horizontal or almost, assigned at least to slidably support replacing pallets and load carrying pallets.

A portal element placed transversely to the median portion of the slide member and having a bulkhead element transversal to the slide member and raiseable with respect to the latter by a predetermined height equal to or slightly higher than the height of the pallet to be replaced forming a window for the passage of the latter pallet to be replaced translated by the push exerted thereon by a replacing pallet.

In the operative condition, the pallet to be replaced and the respective load are translated in a longitudinal forward direction with respect to the slide member, up to an exchange site on the slide member in which such pallets to be replaced and the respective load are respectively in front of the window and in abutment with the bulkhead element, a forward force exerted on the pallet to be replaced by the replacing pallet, causes the insertion of the latter under the load and the removal of the pallet to be replaced beyond the window until a collecting site is reached on the portion of the slide member opposite to the exchange site, obtaining the load support by the replacing pallet ready to be picked up with the overlying load.

A disadvantage of said known machines consists in the fact that if the second or replacing pallet is of a height or thickness greater than the pallet to be replaced or first pallet, the sliding of the second pallet under the load is prevented by the fact that the front edge of the second pallet matches against the lower end of the load, locking itself.

Another disadvantage consists in the fact that in case of very heavy loads, the second pallet friction under the load can be excessive and lead to blockages and/or damages. Said machines in use can also be equipped with lateral pressers, possibly equipped with respective lifters, capable of matching two opposite sides of the load, stabilizing it and possibly lifting it or relieving its pressure on the first pallet.

These second known machines have the disadvantage of being more expensive and complex and of not being able to act effectively and without damage to the load, in the case of unboxed loads, for example in bags, and in case of loads fragile or unstable to lateral pressures, for example consisting in bottles, bottle packs, drums, barrels, cylinders, etc.

### DISCLOSURE OF INVENTION

An object of the present invention is to propose a device for replacing a pallet supporting a load with the possibility of keeping this pallet raised to also allow the replacement of a pallet with a replacing pallet of greater or equal height or thickness.

An object of the present invention is to propose a removable device to keep a first pallet to be replaced at least partially raised from the slide member and carrying a respective load without interfering with the sliding of a second replacing pallet sliding on said slide member by moving the pallet to be replaced and inserting itself under said load even in cases where the replacing pallet is of greater height than the pallet to be replaced.

Another object of the present invention is to propose a simple, reliable and inexpensive device.

Another object is to propose a device of small size and applicable also to machines and equipment already installed and operational.

A further object of the present invention is to propose a device for replacing pallets and/or for overlapping loads which is relatively simple, inexpensive, reliable and versatile for operators with pallets and loads of almost any type.

A further object is to propose a device suitable for accumulating the original pallets and which allows them to be removed front or rear with respect to the device.

Another object is to propose a device that can be used with palletized goods having pallets and loads of different sizes and types.

A further object is to propose a device capable of superimposing the loads of two or more original pallets on a single replacing pallet.

Another object is to propose a device free of active push elements for the sliding of the pallets and which allows this sliding to be carried out by means of forklifts or other means for moving the pallets with and without the loads.

Document CN 201 284 149 discloses a device according to the preamble of claim 1, for changing a pallet having a load where a front baffle, a central baffle and a back baffle, in cooperation with a platform unit jointly surround a stacking space for storing a stack of replacing pallets and a replacement space for a main pallet (to be replaced) and the respective load consisting of goods. The front baffle, the central baffle and the back baffle are mutually parallel and each is provided with a port respectively driving, replacement and back for the passage of the pallets.

A drive circuit comprises hydraulic rods for translating forward and backward a push plate assigned to translate the pallets through the abovementioned ports. The translation orientation of the push plate and of the pallets, is perpendicular to the baffles. Due to the features of document CN 201 284 149, above mentioned and that can be seen from the same document, it does not seem suitable for replacing load supporting pallets with others of greater height. In addition, the stack of pallets, the main pallet with the respective load of goods and the load supported by the replacing pallet, must be positioned in the respective stacking space and replacement space with movements parallelly oriented to the baffles, to avoid colliding with them, and obviously perpendicular to the orientation of the translation of the push plate and the pallets.

The device of document CN 201 284 149 could be bulky, requires large surrounding areas for loading, unloading and moving the stack of pallets, the main pallets with loads and without loads. Said prior art document need an active drive unit or at least a sliding pushing plate.

The invention is defined by a device according to claim 1.

### BRIEF DESCRIPTION OF THE DRAWINGS

The features of the invention are highlighted hereinafter with particular reference to the accompanying drawings in which:
- figure 1 shows a top view of the device for replacing a pallet supporting a load with the possibility of keeping this pallet raised, object of the present invention, associated with a machine for replacing a pallet supporting a load with another pallets in a protruding condition of six support members;
- figure 2 shows a partial, fractured, enlarged and sectioned view of figure 1 in which the six support elements illustrated in a continuous line are in the same condition of figure 1 and illustrated in broken lines are in a retracted condition;
- figure 3 shows the device and the machine of figure 1 in the retracted condition of the six support members;
- figure 4 shows a sectioned view according to the plane IV - IV of figure 1;
- figure 5 shows a sectioned view according to the plane V - V of figure 3;
- figure 6 shows an axonometric view of an alternative embodiment of the device of figures 1-5 in a condition of readiness for operation in which this device is fixed to a horizontal floor;
- figures 7-9 show respectively a side, rear and top view of the device of figure 6;
- figures 10 and 11 show sectioned views from a longitudinal plane and in which some parts have been removed of the device of figure 6 in which a bulkhead element and a bracket element are in respective and different vertical positions;
- figure 12 shows an axonometric and enlarged view of a hooking member of figure 6 and partial of some parts connected thereto;
- figure 13 shows an enlarged and partial view of the device of figure 7 associated with a pallet to be replaced already separated from the respective load;
- figure 14 shows the elements of figure 13 in a condition of advancement of the pallet to be replaced translated by a pushing bar of a pushing element of the device;
- figure 15 shows an enlarged axonometric view and in which some parts have been removed of the pushing element connected to other parts of the device;
- figure 16 shows a sectioned and partial view of the portion of the device of figure 6 associated with the pallet to be replaced and with a replacing pallet;
- figures 17 and 18 show the elements of the device of figure 16 associated with the pallet to be replaced in advancement conditions by means of the forward bar;
- figures 19-28 show the device or parts thereof viewed laterally, in a sequence of separation phases from a load of the pallet to be replaced and of the replacement of the latter by a replacing pallet that is inserted under the load supporting it;
- figure 29 shows a side view of the device associated with a stack of pallets to be replaced which has accumulated in the device following their replacement;
- figure 30 shows a variant of a detail of the device showed in figure 15.

### BEST MODE TO CARRY OUT THE INVENTION

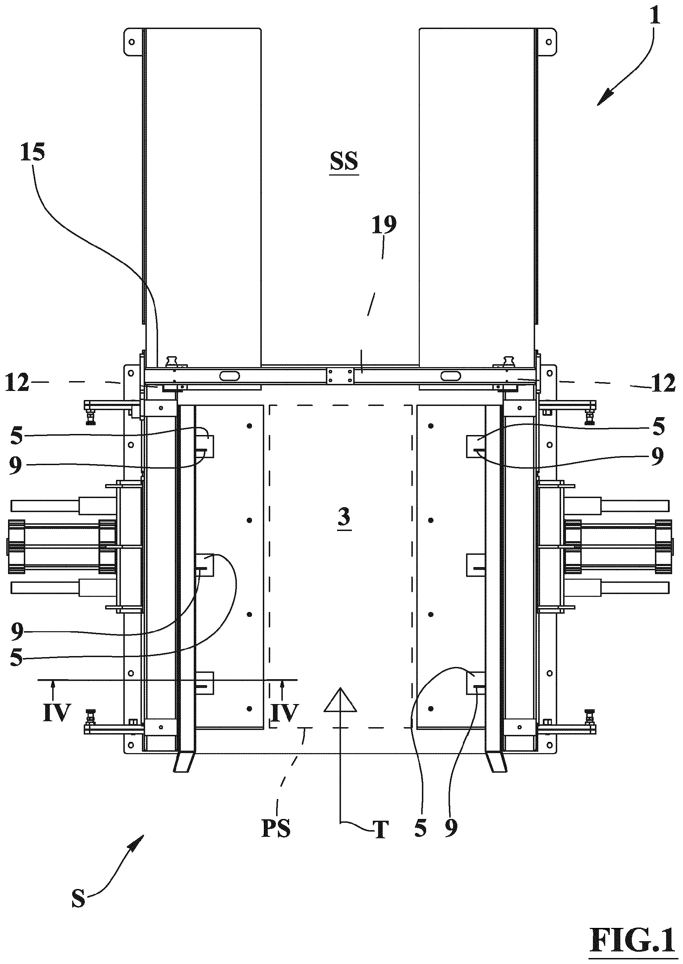

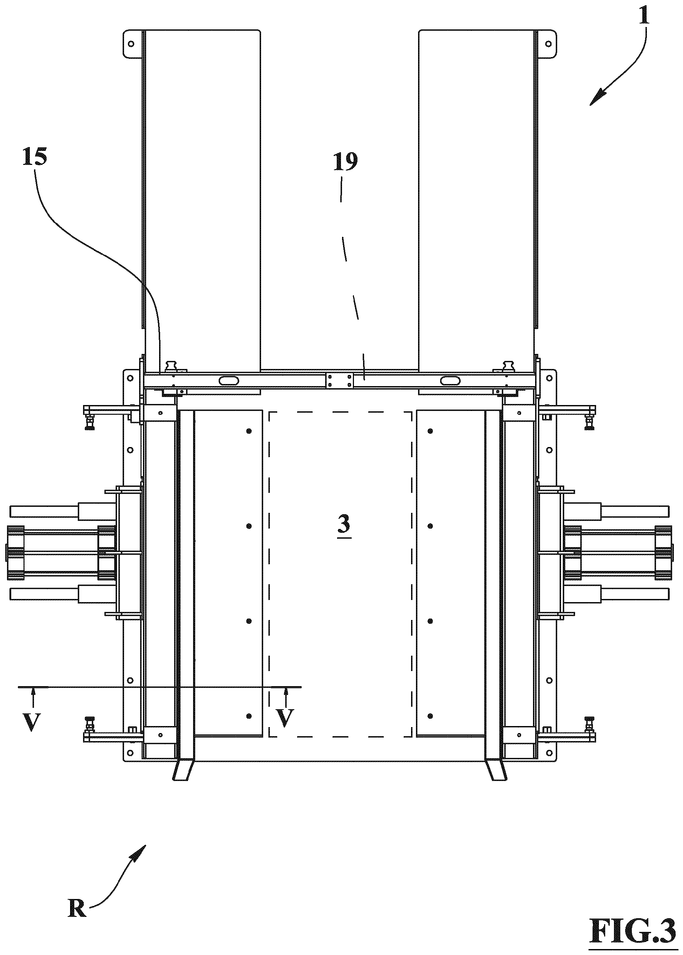

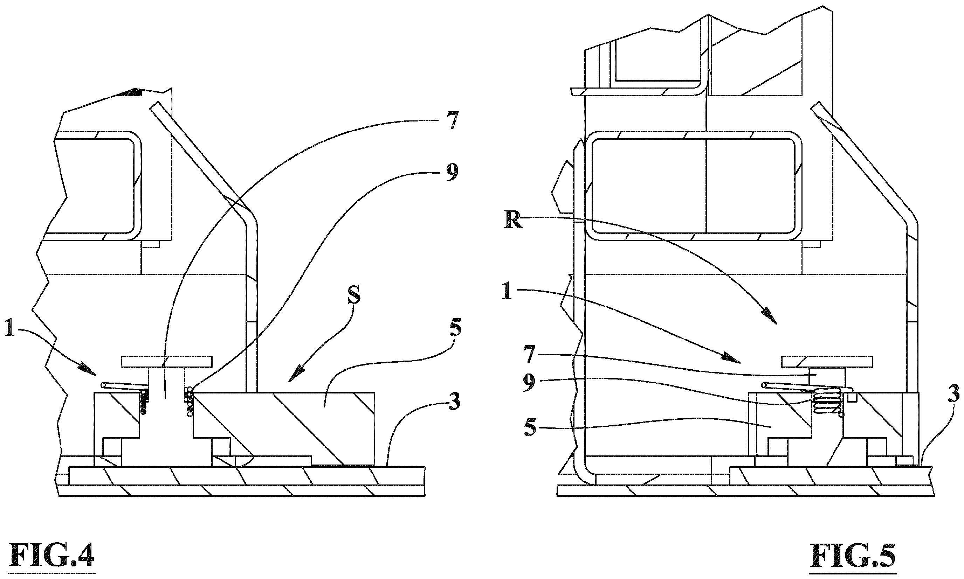

With reference to figures 1-5, numeral 1 indicates the device for replacing a pallet supporting a load with the possibility of keeping this pallet raised.

The device 1 is provided with a slide member 3 assigned to support in a sliding manner replacing pallets Q and pallets to be replaced P carrying a load C or without a load.

The device 1 comprises a portal element 15, for example in the form of Π (Greek letter P) or bridge, placed transversely to the median portion of the slide member 3 and carrying a bulkhead element 19 transversal to the slide member 3 and raised or raiseable with respect to the latter by a predetermined height thus forming a window 11 for the passage of at least the pallet to be replaced translated by the push exerted thereon by a replacing pallet to be inserted under said load.

Such predetermined height is equal to or slightly higher than the height of the higher pallet between the pallets to be replaced and the replacing one.

The bulkhead element 19 can be rigidly fixed to the portal element or it can be positioned along the portal element to adjust the height of the window according to the pallets features.

The orthogonal projection of the load and the respective pallet on the slide member 3 defines or corresponds to a first surface PS of the plane of the slide member in which the pallet to be replaced with the respective load is deposited or pushed, and where the replacement of the pallet to be replaced with the replacing one happens.

The pallets slide on the slide member 3 in a sliding direction T parallel to the longitudinal axis of this slide member 3.

The device 1 comprises two plurality of support members 5 each of which 5 is constrained to swing on the slide member 3 around a respective rotation pin 7 connected to an end portion of its support member 5 and fixed perpendicularly to the geometric plane of the slide member 3.

Each rotation pin 7 is preferably fixed to a plate or slab or lateral guide of the slide member 3 or can be fixed to a support or floor on which the device lies; the latter alternative facilitates the possibility of implementing the invention even in pre-existing systems.

The pins of the members 5 of a first right plurality of such members are distributed on a respective first line parallel to the sliding direction T and placed on the right side of the first surface PS and the rotation pins 7 of the members 5 of the other and second left plurality of such members are arranged on a second line parallel to the sliding direction T and placed on the left and opposite side of the first surface PS.

In the case of pallets of different heights, the maximum height or the protrusion of the support members 5 above the slide member 3 is equal to or greater than the difference in the heights of the replacing and to be replaced pallets.

It should be noted that the replacement of a pallet with another of the same or similar height or thickness also benefits from the presence of the support members 5, also of reduced but not null height, as the latters 5 reduce the effort and facilitate sliding even in such a case.

Alternatively, the device can comprise a single plurality of support members 5 placed on the same side of the first surface PS and having a length greater than half the width of said first surface PS or it can comprise a plurality of support members 5 on one side and a single support member 5 on the other side.

Each support member 5 has a parallelepiped or prismatic elongated shape and can swing around the respective rotation pin at least between a protruding condition S in which it is perpendicular to the sliding direction T and protrudes above the first surface of the slide member 3 and a retracted condition R in which it is parallel to the sliding direction T and does not occupy the slide member 3 first surface.

The device 1 in the protruding condition S provides a support to the pallet to be replaced carrying the load keeping it raised by the slide member 3 and, thanks to the support members 5 rotation, does not hinder the sliding on the slide member 3 in the sliding direction T of the highest replacing pallet.

Each support member 5 is provided with a respective elastic member 9 which transmits to it an elastic force or couple directed towards the protruding condition S; preferably the elastic member 9 of each support member 5 consists of a helical torsion spring associated with the respective rotation pin 7, alternatively it can consist of an extended or compressed spring acting on a protrusion of the end of the support member 5 carrying the respective rotation pin 7.

Operation requires that, if the replacing pallet is higher than the one to be replaced, the latter with the respective load is placed on the support members 5, kept protruding from the respective springs, kept raised above the first surface PS; otherwise the pallet to be replaced with the respective load is slid on the slide member until the first surface PS is reached, in which case the support members 5 rotate in the retracted condition without hindering the sliding of the pallet.

Alternatively, the invention provides that each support member 5 is of an elongated cylindrical shape or that it consists of a plurality of equal and independent disks or wheels; the cylindrical body, wheels or disks of such alternative form of the support member 5 are freely rotatable around the longitudinal axis of the support member 5 itself; it is also expected that the latter may be of another elongated shape.

Each support element 5 is made of a material with a low friction coefficient or at least one of its upper and lower faces is provided with a layer of material with a low friction coefficient or rolling elements.

As seen, when the replacing pallet has a height equal to or less than the pallet to be replaced carrying the load, this replacing pallet with its load is slid on the slide member 3 until the load matches with the bulkhead 19 and the pallet to be replaced occupies the first surface PS. During the sliding of the pallet to be replaced, the support members 5 rotate under the effect of the advancement of the front side of the pallet to be replaced.

The subsequent push and sliding of the replacing pallet cause the passage of the pallet to be replaced through the window 11 under the bulkhead 19, the insertion of the replacing pallet under the load and the passage of the pallet that was to be replaced and now replaced until reaching a second surface SS of the slide member located beyond the window 11 with respect to the first surface.

When the replacing pallet has a height greater than the pallet to be replaced carrying the load, such replacing pallet with its load is placed above the support members 5 above the first surface PS of the slide member 3 and with the load matching the bulkhead 19. The replacing pallet, higher than the one to be replaced, is made to slide on the plane and, while the support members 5 rotate due to its advancement, it always remains below the load, without jamming against it, and pushes the replacing pallet through the window under the bulkhead and inserting the replacing pallet under the load.

Preferably the portal element 15 is provided with a pair of spaced vertical uprights 12 fixed to respective and opposite sides of the median portion of the slide member 3 and connected to the bulkhead element 19 which separates the first surface PS from a second surface of the slide member 3. Such connection is preferably manually adjustable in height or motorized, as exemplified in the embodiment described below.

A simple variant of the device, the understanding of which does not require specific figures, provides that each rotation pin 7 is parallel to the slide member 3 and perpendicular to the sliding direction T where each support member 5 swings, on a vertical plane, between the protruding condition S above the slide member 3 and the retracted condition R in which it is housed in a cavity below the sliding plane of the slide member 3.

The invention alternatively provides for the possibility that the support members 5 are driven, in rotation around the vertical or horizontal axis of their pin by respective motors controlled by element sliding sensors on the slide member 3. A further alternative provides that the support members 5 have no pins and are placed in vertical translation, between the protruding condition S above the slide member 3 and the retracted condition R under the slide member 3 by respective linear actuators.

Preferably each support member 5 can be in the shape of a parallelepiped and is made of a material with a low friction coefficient or at least its lower face or each of its horizontal faces, it is equipped with a layer of material with a low friction coefficient or rolling means, such as wheels or balls.

The support members 5 can be of replaceable type to replace support members 5 having a certain height with others of different heights and the rotation pins 7 can be equipped with stops for support members 5 of various heights.

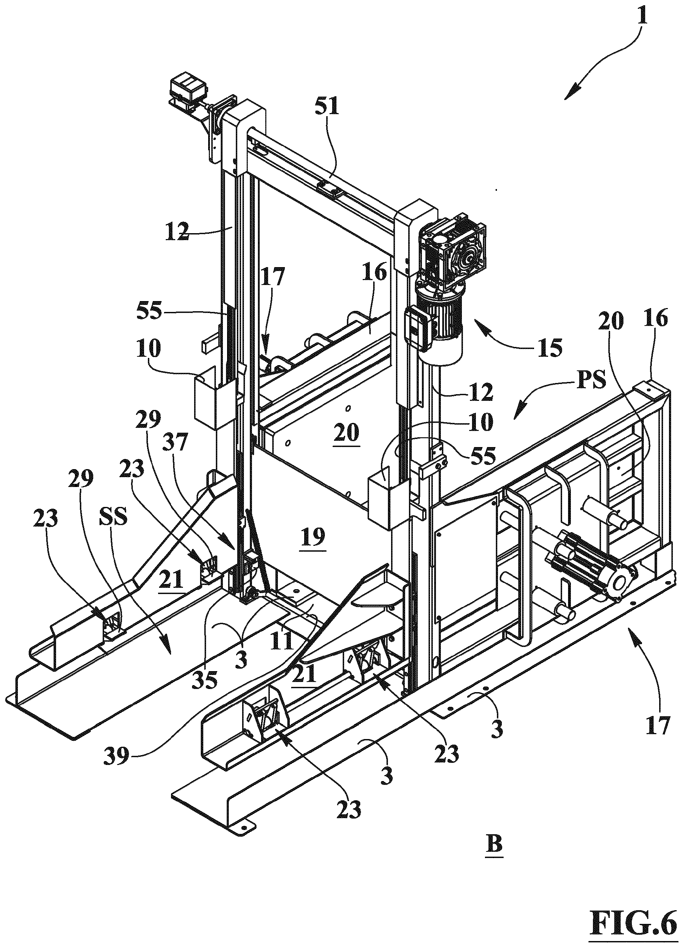

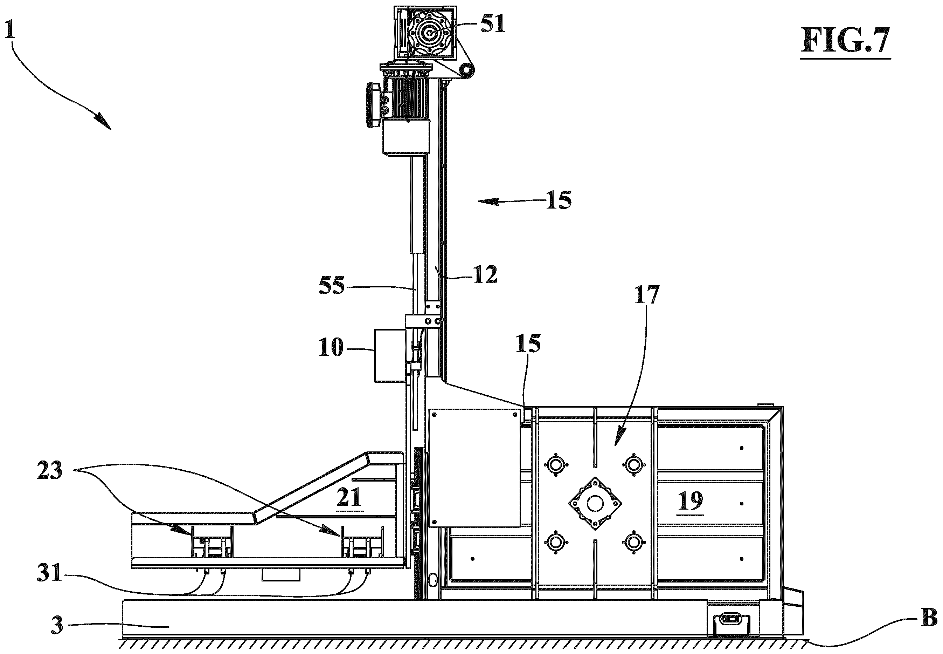

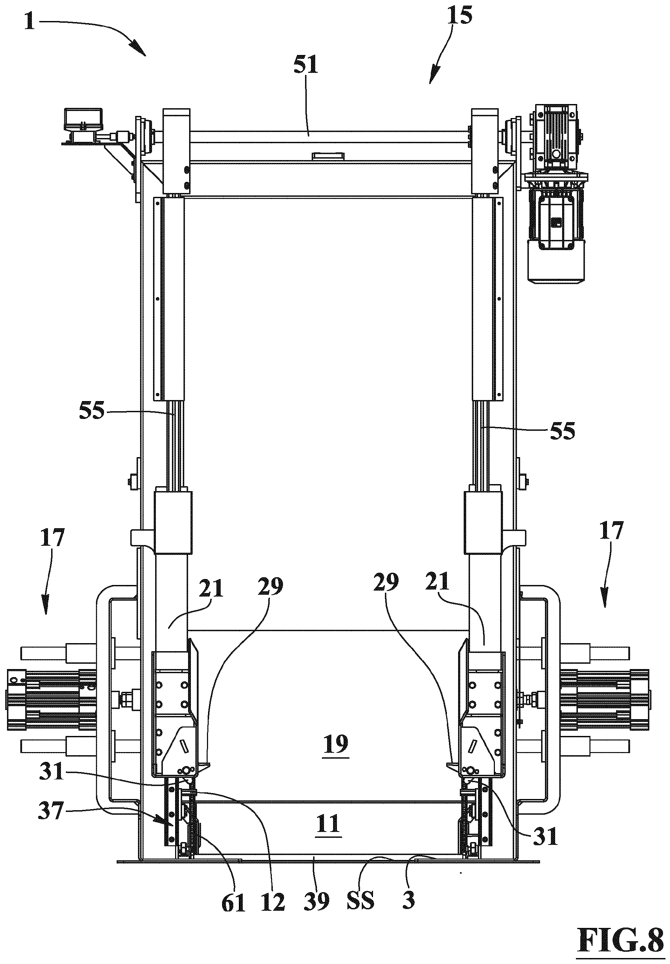

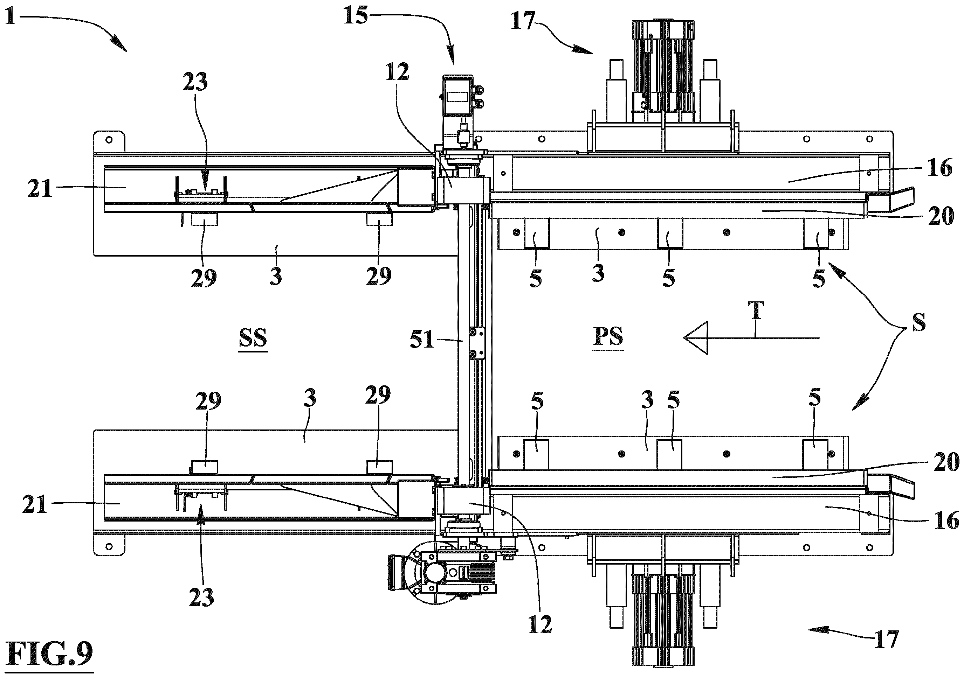

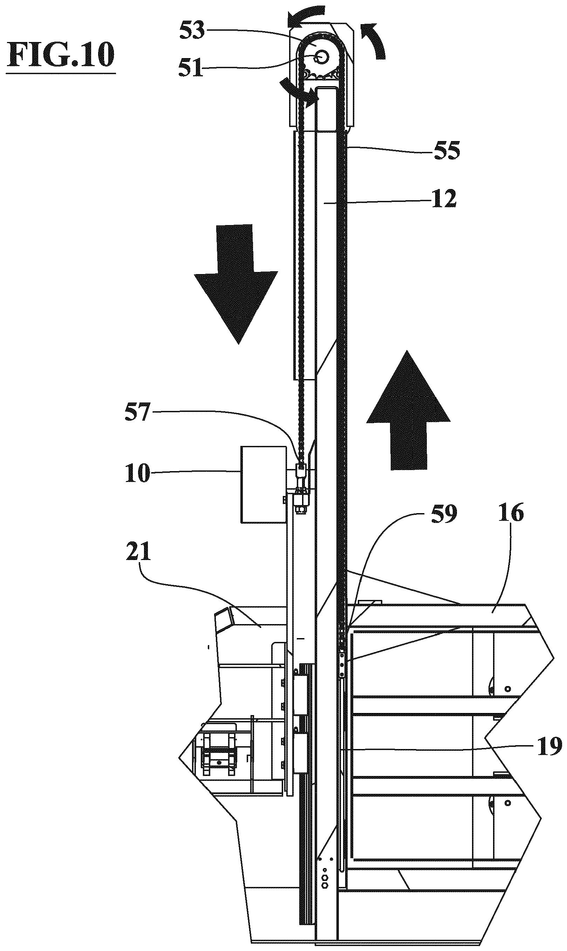

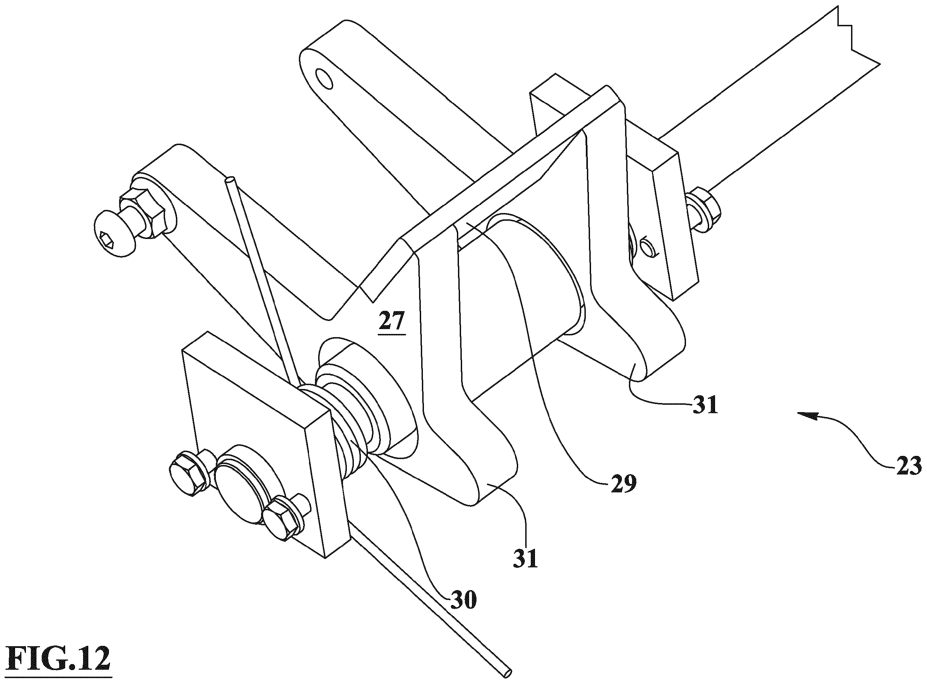

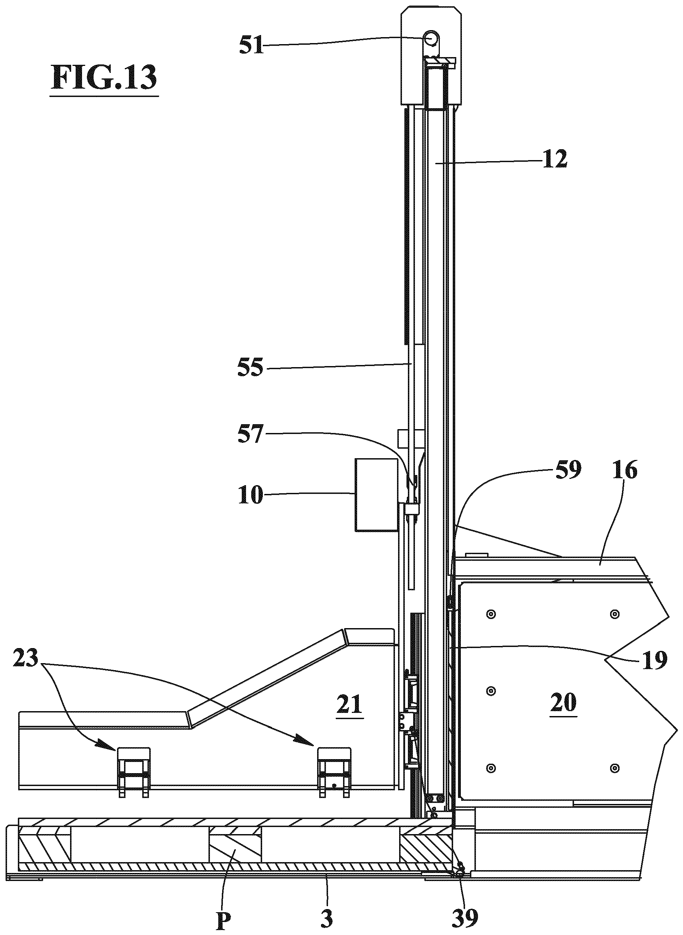

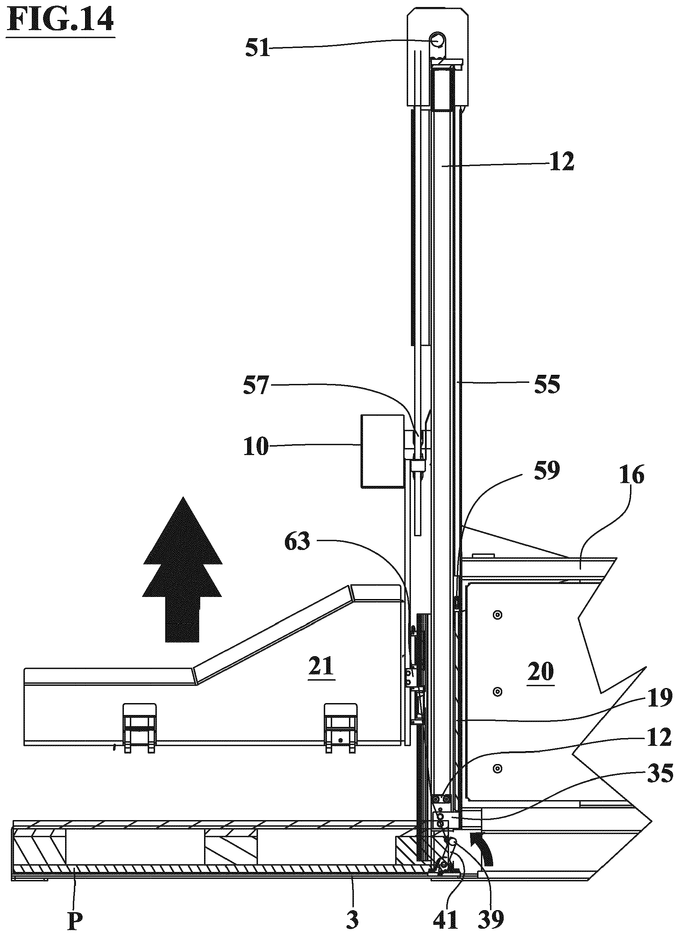

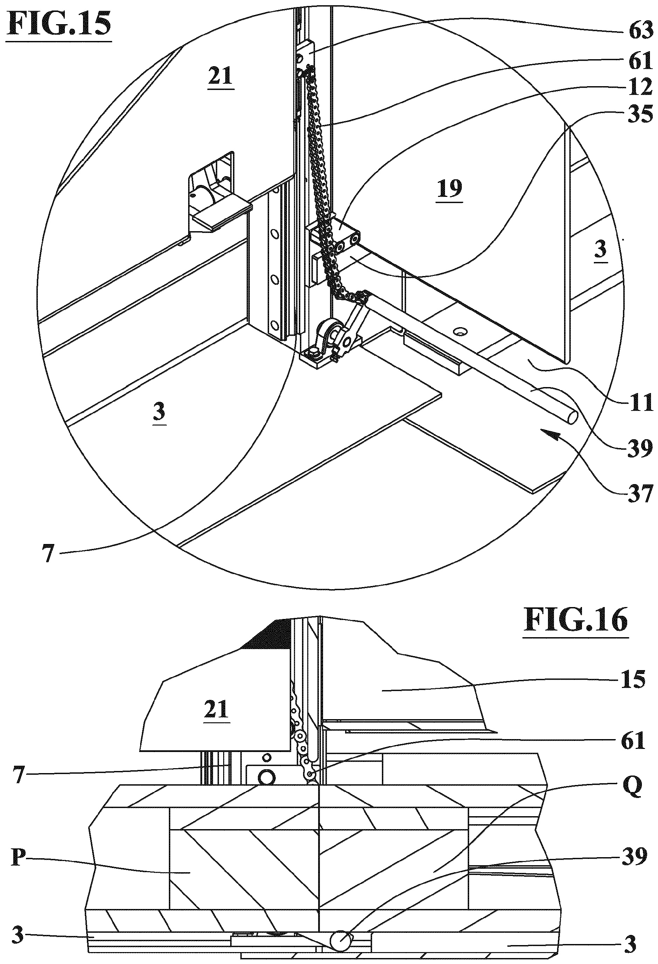

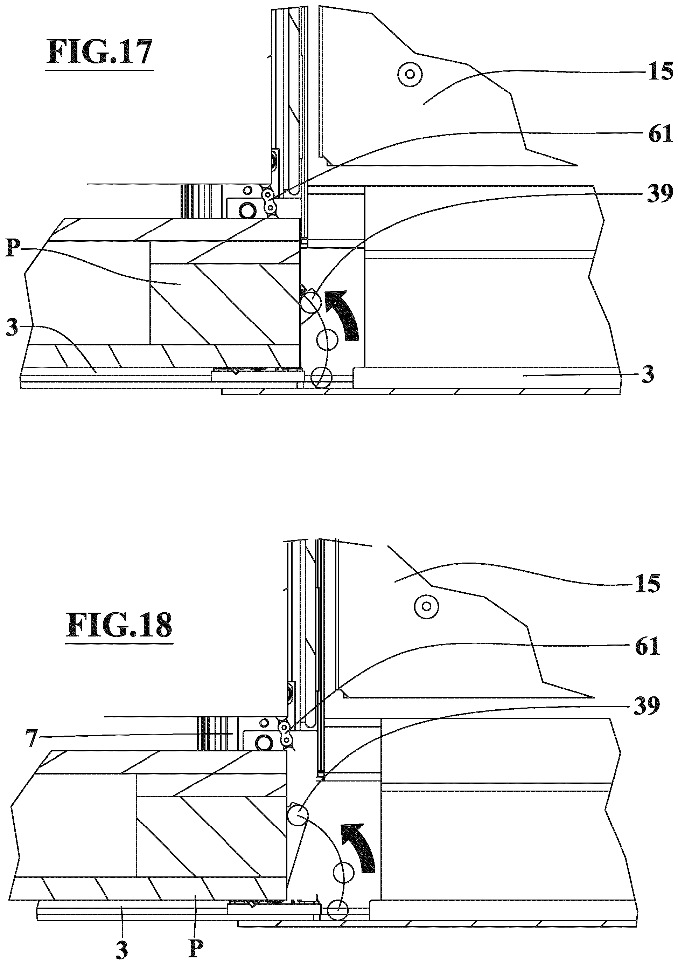

The variant of figures 6-30, although adopting the same technical solution as the previous embodiment, provides greater automation and functionality.

Also in this variant, as in the previous embodiment, the rotation pins 7 of the support members 5 are preferably fixed to a plate or slab or guide of the slide member 3 lateral to the first surface PS.

The device 1, in an operative condition in which it is placed on an almost horizontal floor or surface B and to which it is fixed, is assigned to allow the replacement of a pallet to be replaced P supporting a load C with a replacing pallet Q; for example, a package coming from a logistics chain and arrived at a device 1 installation site, can comprise a load, for example consisting of boxed goods, supported by a pallet P which for various reasons, for example standards, realization, risks of contamination, cost or other must be replaced by another replacing pallet Q which must take the place of the pallet to be replaced P under the load C to support it while the pallet to be replaced P can be accumulated together with others of the same nature and then be picked up and moved or evacuated.

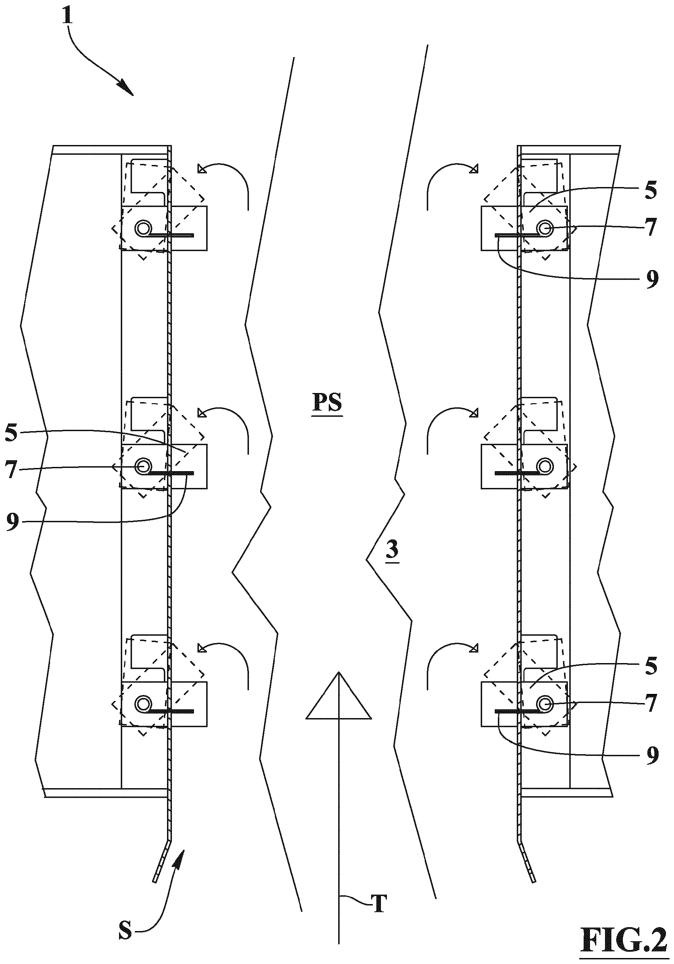

The device 1 has an access for the load supported by the pallet to be replaced; in figures 1 and 2, the access is located at the right end of the device and the pallet to be replaced is moved in a longitudinal forward direction facing the access to the opposite end of the device; said direction in these figures is from right to left along the device 1 longitudinal development.

The translation of the pallet to be replaced P, with and without load C, is made by direct action or indirect push of a transport means which may consist, for example, of a lift truck or forklift or a trans-pallet or similar known devices. The picking and evacuation of the pallets to be replaced without the load and stacked, can take place from the end of the device opposite the access or, as better explained below and to facilitate the operations and/or to save space, from the access itself.

The exit of the load C supported by a replacing pallet Q takes place through the access by means of the same or another transport means.

Said device 1, in its operative condition, comprises at least:
- a slide element 3 assigned to be placed on said horizontal floor or surface B and fixed thereto at least to support slidably said pallets P, S from the access in the longitudinal forward direction before and, if necessary, in the opposite direction thereafter, for this purpose slide element 3 has at least one sliding surface with a total width equal to or greater than that of pallets P, S and a length approximately twice the length of one of these pallets P, S or a length approximately equal to the sum of the lengths of such pallets to be replaced P and replacing Q, if different;
- at least one portal element 5 comprising at least a pair of uprights 12, for example consisting of extruded profiles or shaped section beams, spaced, vertical and fixed to the respective and opposite sides of the median portion of the slide member 3;
- a vertical bulkhead element 19, for example flat and slab-shaped or grid, connected to said uprights 12 transversely to the slide element 3 and raised in relation to the sliding surface of the latter 3 of a predetermined distance equal to or slightly higher than the height of the pallet to be replaced P, thus forming a window 11 between the lower edge of the bulkhead element 19 and the sliding surface of the slide element 3 for the passage of the latter pallet to be replaced P.

Said slide element 3 has an elongated rectangular shape and its longitudinal geometrical axis defines a longitudinal direction which is parallel or coincident with said longitudinal forward direction of the pallets sliding on slide element 3. Hereinafter the terms "longitudinal direction" and "longitudinal forward direction" shall be used interchangeably because they have the same orientation.

Said slide element 3 may consist of a support and sliding plane extending throughout the longitudinal development of the device from the access to the opposite end or, preferably, comprises two lateral guides parallel to the longitudinal forward direction and equipped with respective sliding surfaces for pallets P, S. Each of such guides extends longitudinally from the access to the opposite end and one or more inclined planes or ramps may be provided at the access to prevent the pallet to be replaced and/or the load from jamming.

The median portion of each of such guides is fixed at the base of a corresponding upright 12.

Such guides have respective transversal concave seats extending downwards below said sliding surfaces.

Such transversal concave seats are placed immediately upstream of the orthogonal projection of the bulkhead element 19 on the slide element 3 in relation to the longitudinal forward direction.

Hereinafter the first surface PS of the slide member 3 corresponding to the projection of the load and the respective pellet positioned in the device and indicatively comprised between the access and the bulkhead element 19, will also be sometimes indicated as an exchange site and the second surface SS, which is comprised between the bulkhead element 19 and the slide member 3 end opposite the access, will sometimes also be referred to as collecting site.

The sections or segments of each of the sliding guides separated from the respective transversal site are the same or preferably different and the sections of the guides on the first replacement surface PS side have sliding surfaces in anti-friction synthetic material.

The uprights 12 of the portal element 5 must oppose to and counter a frictional force acting on them in the forward direction and may be equipped with struts, gussets or stalls connected to the slide element 3 or the floor to better resist such force.

The bulkhead element 19 may be rigidly blocked to the uprights 12 of the portal element 5 or may be connected to such uprights 12 by means of an adjustable attachment to obtain a window 11 with a respectively fixed or adjustable height according to the height or other features of the pallets to be replaced P; alternatively, and as better described below, the bulkhead element 19 may be operated to move vertically by sliding its vertical sides along respective vertical guides cut into such uprights.

In particular, the invention also provides that bulkhead element 19 can be fixed and locked at a predetermined vertical distance from slide element 3 or can be supported by a pair of rigid or adjustable side supports to determine the minimum distance of the bulkhead element 19 from the slide member 3 so that this minimum distance is respectively fixed or adjustable. In the case of the adoption of rigid or adjustable side supports, the bulkhead element 19 can always be supported by them or, as seen and as better described below, it can be lifted by respective means provided for this purpose. It should be noted that when the bulkhead element is fixed to the uprights or supported by the pair of rigid side supports, the height of window 11 is fixed; the adoption of a pair of adjustable side supports and/or lifting elements of the bulkhead element permits to adjust the height of window 11, for example according to the various types of pallets, where such lifting elements may be dedicated to adjusting the height of the window or may be used mainly or exclusively for other function as described below.

In the operative condition, the transport means translates the pallet to be replaced P and the respective load C in the longitudinal forward direction until they occupy the first surface PS on the slide member 3 in which such pallets to be replaced P and the respective load C are respectively in front of the window 11 and in abutment with the bulkhead element 19, a forward force exerted by the same or other transport means on the pallet to be replaced P, for example by means of at least the replacing pallet Q, causes the insertion of the latter Q under the load and the removal of the pallet to be replaced P beyond the window until reaching the collecting site on the second surface SS of the portion of the slide member 3 opposite the first surface PS or exchange site, obtaining the support of the load C by the replacing pallet Q ready to be picked up with the overlying load and the disengagement of the pallet to be replaced P.

The device 1 comprises a pair of side arms 16 connected to the uprights 12 of the at least one portal element 15 protruding perpendicularly from the uprights in the access direction, laterally delimiting the volume above the first surface PS to laterally support the load C. Such side arms 16 are preferably either flat or have faces facing the load in a flat shape where such arms and/or flat faces are arranged vertically.

Alternatively and preferably, such side arms 16 are provided with respective pushers 17 assigned to move corresponding vertical side walls 20 parallel to the uprights and to that forward direction and facing towards said first surface PS. Such pushers 17 comprise respective linear guides and linear translators horizontal and perpendicular to the uprights and to the forward direction where the fixed portions of such guides and actuators are fixed to first elements of the side arms, connected to the uprights and their movable portions are perpendicularly fixed to said respective side walls.

The pushers 17 move the side walls 20 apart and bring them closer together so that the latter can tighten the load, stabilizing it, during the replacement of the pallet to be replaced with the replacing one and can release it at the end of the replacement.

The side walls 20 have sufficient dimensions to meet with all or almost all the side surface of the load and their lower edges are placed at a vertical distance from the underlying portion of the slide member 3 such that they are at the same height or slightly higher than the upper edge of the pallet to be replaced P supported by the transport means; in this way the side walls can tighten the load C without the risk of interfering with the pallet to be replaced.

Optionally, said side arms 16 can be slidably connected to respective vertical guides (not shown) made in, or fixed to, the respective uprights 12 and the device 1 can include a lifting and lowering actuator element of each side arm 16 (actuator element not shown) along said vertical guides. Each lifting element may include, for example, a linear actuator of electric or hydraulic type or of the nut screw and motorized screw type, chain, rack and motorized pinion, etc., each having one end or element fixed to a respective upright or slide element 3 and the other end or other element fixed to the respective side arm 16.

This optional arrangement which provides the arms and side walls 16, 20 vertically movable and whose understanding does not require specific figures, permits to lighten the pressure of the load on the pallets making it easier to slide them during their replacement and/or mainly to lift a first load by also removing the supporting pallet to insert a second load, supported by a pallet to be replaced if necessary, under the first load obtaining a pallet that supports both superimposed loads. In this way it is possible to halve the number of pallets involved and the occupied surface area.

The device 1 also includes two bracket elements 21, of an almost linear or elongated prismatic shape, parallel to the forward direction and facing away from the access for loading and to the first surface PS or the exchange site.

Each bracket element 21 is connected to a respective upright 12 and slides vertically along respective vertical lifting guides connected to, or made in the corresponding upright by means of at least one lifting actuator element between a lower position, wherein said bracket element 21 abuts with the slide member 3 or with the floor, and an upper condition in which it is lifted.

Each of these bracket elements 21 is equipped with at least one hooking member 23 assigned, in the downward end stroke of the respective slide element 3, to hook a respective side of a pallet to be replaced P placed on the slide element 3 in the collecting site over the second surface SS that is from the side of the window 11 opposite the first surface PS.

Each hooking member 23 comprises a body 27 rotatably pivoted to the respective bracket element 21 to rotate around an axis parallel to the forward direction, this body 27 has a rod 29 which protrudes from the body in an approximately radial direction; a resilient element 30, associated with body 27 and attested against the bracket, acts on the body to elastically push the rod 29 into a position protruding from the respective bracket element 21.

Said body 27 further comprises at least one protruding member 31 assigned to abut with the slide element 3 or with the floor in the lower position of such bracket element 21 to rotate the body 27 by placing the rod 29 inside the profile of its bracket element 21.

Preferably each bracket element 21 is provided with at least two hooking members 23 whose bodies are rigidly connected by a common pin freely rotatable in respective rotation seats fixed to or housed into the respective bracket element 21.

When the first pallet to be replaced P passes through the window, it occupies the second surface SS on the slide member 3 between the bracket elements 21 in abutment with the slide member or with the floor. In such lowered position, the rods 29 fall back into the bracket elements and do not protrude as a result of their rotation due to the contact of the protruding member 31 with the floor or with the slide member and therefore the rods do not interfere with the sliding of the pallet. The same condition is achieved by lowering the bracket elements 21 after sliding to the second surface SS.

Lifting the bracket elements 21 involves the exit rotation of the rods, which engage in the pallet side recesses by hooking it and lifting it up, releasing the second surface SS, that is the collecting site, on the sliding means, which is then occupied by the second pallet to be replaced, which is slid through the window.

A new lowering and lifting of the bracket elements 21 causes the first pallet to rest on the second, the latter to be hooked and both to be lifted. When a stack of pallets to be replaced is complete, the lowering of the bracket elements 21 to the lower position involves the rotation of the body 27 of each hooking member 23 and the consequent return of the rods 29 which release the base pallet of the stack, which can therefore be removed by accessing it from the end opposite the device access or, after lifting the bulkhead element 19, from the access end of the device 1 itself.

As mentioned above, the vertical sides of the bulkhead element 19 are sliding along the respective vertical guides of the uprights 12.

Said bulkhead element 19 is operated for its vertical translation by a lifting actuator element between a lower position, where the lower edge of the bulkhead element 19 abuts with stop elements 35 fixed rigidly or at an adjustable height to the uprights 12 and where such lower edge delimits the upper side of the window 11, at a higher position at a height higher than that of a stack of pallets to be replaced formed on the second surface SS.

In such upper position of the bulkhead element, a transport means can enter through the access for the load and can access, from the first surface PS, to the second surface SS and can pick up and remove a stack of pallets to be replaced P placed on the second surface SS, that is in the collecting site, by accessing the device from said access and said stack from the same side and direction of translation, insertion and picking up of the load supported respectively by the pallet to be replaced and the replacing pallet.

In general, the translation of the replacing pallet driven by the transport means may be insufficient to translate the pallet to be replaced completely beyond the window 11. The complete translation beyond window 11 of the pallet is necessary to lift the pallet itself without interfering with the bulkhead element. Such complete translation can be obtained in various ways, for example by placing a thickness in front of the replacing pallet, for example a suitable wooden or plastic beam, capable of pushing the pallet to be replaced beyond the window, or and preferably device 1 can be equipped with a pushing element 37 placed transversely at the base of the uprights 12 and assigned to provide the pallet to be replaced with a translation push beyond window 11.

Such push element 37 comprises a transversal pushing bar 39 whose ends are fixed to eccentric arms 41 swiveling around respective pins connected to the slide member 3 or to the uprights 12, mutually aligned transversely to the slide member 3.

The eccentric arms 41 are operated by at least one rotation actuator element between a first extreme condition in which the pushing bar 39 is in the housings of the side guides of slide member 3 and does not interfere with the pallets translation and a second extreme condition in which it is on the second surface SS spaced from window 11.

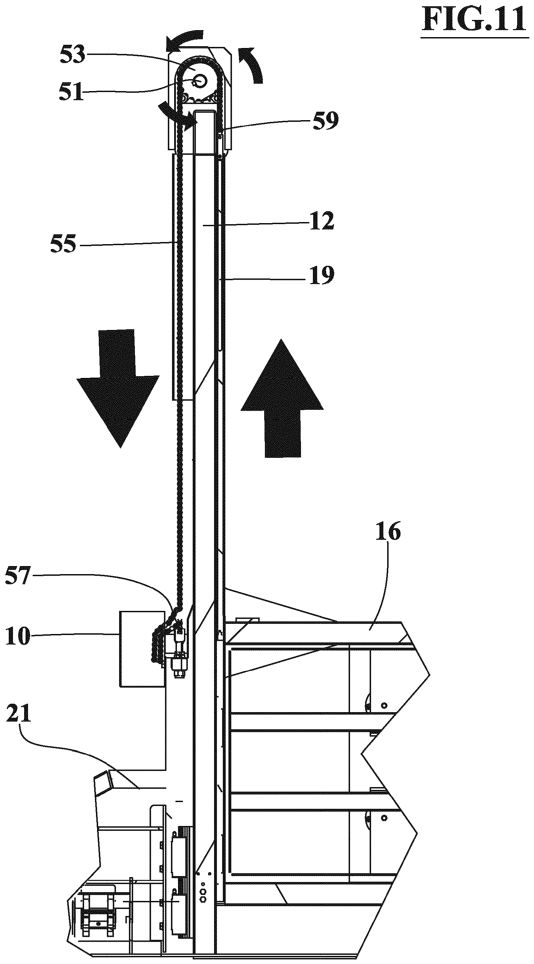

In the passage between these first and second conditions, the pushing element pushes an edge of the pallet to be replaced P from the side of the slide member 3 of the first surface PS to the opposite side that is in the collecting site on the second surface SS, carrying out the complete translation of the pallet to be replaced through the window as shown in figures 11-13.

The vertical movement actuator elements of the two bracket elements 21 and of the bulkhead element 19 and the rotation actuator element for operating the pushing bar 39 can be of various types and nature and can be independent, for example each one can consist of a linear and/or rotary actuator of known type, or and preferably they can be of the flexible belt or chain member type, hereinafter referred to as a whole with the term chain.

The lifting actuator element for the sliding of the two bracket elements 21 along the respective uprights 12 comprises a motorized shaft 51 swiveling connected to the upper portion of the portal element 15 perpendicularly to the uprights 12 and to the longitudinal forward direction and carrying two ring gears 53 each carrying a respective chain 55 whose first end 57 is fixed to the respective bracket element 21 to translate such bracket elements 21 between the lower position where they matches with the slide member 3 or with the floor and hook a pallet P and an upper position where they lift a stack of pallets P allowing the translation of a further underlying pallet P.

The lifting actuator element for the sliding of the bulkhead element 19 along the respective uprights 12 comprises a motorized shaft 51 swiveling connected to the upper portion of the portal element 15 perpendicularly to the uprights 12 and to the longitudinal forward direction and carrying two ring gears 53 each carrying a respective chain 55 whose second end 59 is fixed to the upper portion of the bulkhead element 19 to lift it and lower it.

Preferably these lifting actuator elements are unified and the motorized shaft 51, ring gears 53 and chains 55 are in common; the two bracket elements 21 are fixed to the ends of the chains on the same side of the device and the bulkhead element 19 is fixed to the opposite ends.

In order to allow the bulkhead element 19 to carry out a much greater excursion than the bracket elements 21 and to allow independent movements, the chain attachments to the bracket elements 21 are provided with collecting containers 10 for the chain in excess which may accumulate tidily when the bulkhead element is lifted.

The rotation actuator element comprises at least one respective piece of chain 61 having one end fixed to the corresponding end of the transversal pushing bar 39 or the corresponding eccentric arm 41 and the other end connected to the first end 57 of chain 55 either directly or by means of a connection 63 attached to the bracket element 21 on the same side. It is optionally provided that each upright 12 carries a corresponding flap assigned to slidably meet a piece of chain 61 in order to change its angle in respect to the corresponding eccentric arm 41 so as to orientate favorably the force transmitted from the piece of chain 61 to the eccentric arm 41 that is to increase the angle between such segments and the arm.

This device configuration permits to operate the translation of the bracket elements and the bulkhead element and the rotation of the pushing bar by using a single motor, for example electric, to drive the single motorized shaft 51.

One of the various operations of device 1 includes the following sequence of phases shown in the figures above in which the replacing pallet has a height greater than that of the pallet to be replaced which is placed, by a lifting and handling machine, on the first surface PS resting it, with the respective load, over the support members 5 in their protruding condition S.

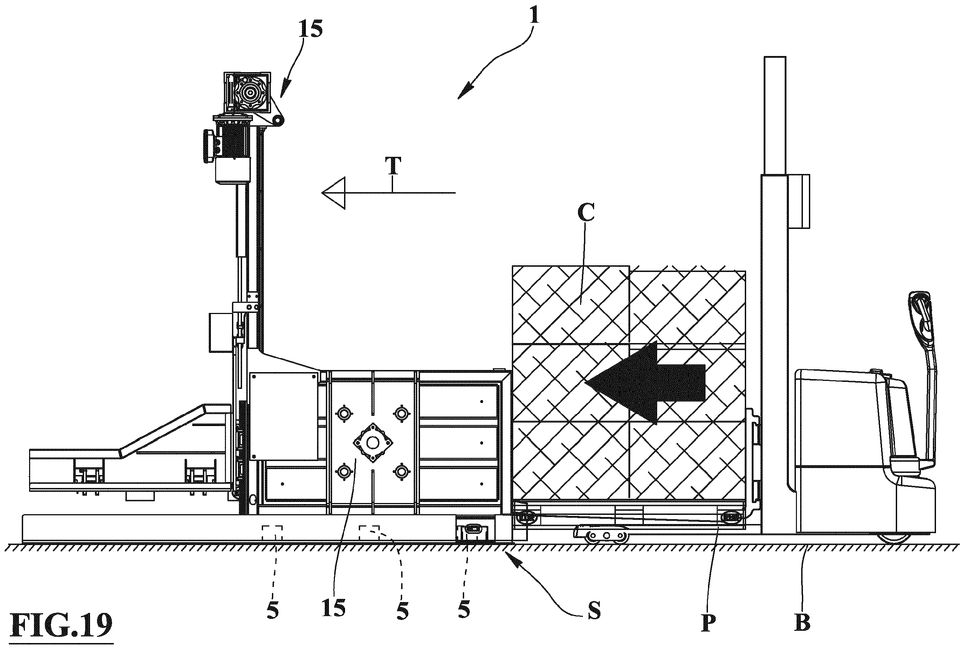

Figure 19: the device is in an initial operative condition with the side walls 20 at the maximum mutual distance, the bulkhead element 19 delimits the window 11 at the top so that it has a height with respect to the slide member 3 approximately equal to the height or thickness of the replacing pallet or approximately equal to or slightly greater than the sum of the heights of the pallet to be replaced and of one of the support members 5, the lower portion of the bracket elements 21 is at a height greater than that of the lower edge of the bulkhead element 19 and the pushing bar 39 is in the concave seats of the slide member 3; the pallet to be replaced P and the respective load C are transported by the operating machine, consisting of a forklift, and are approached at the access of the device 1 keeping them at a minimum height higher than the maximum height of the support members 5;

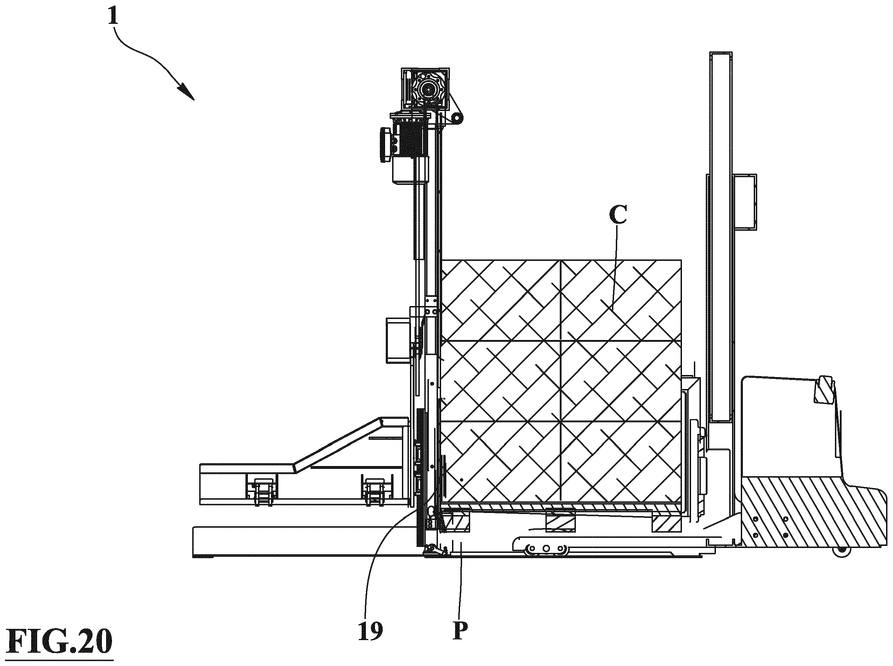

Figure 20: the load C and the respective pallet to be replaced P, still held raised by the forklift, are placed above the first surface PS to place such pallet to be replaced onto the two sets of support members 5 and with the load in abutment with the bulkhead element 19, the pushers 17 have brought closer the side walls 20 which clamp only the load;

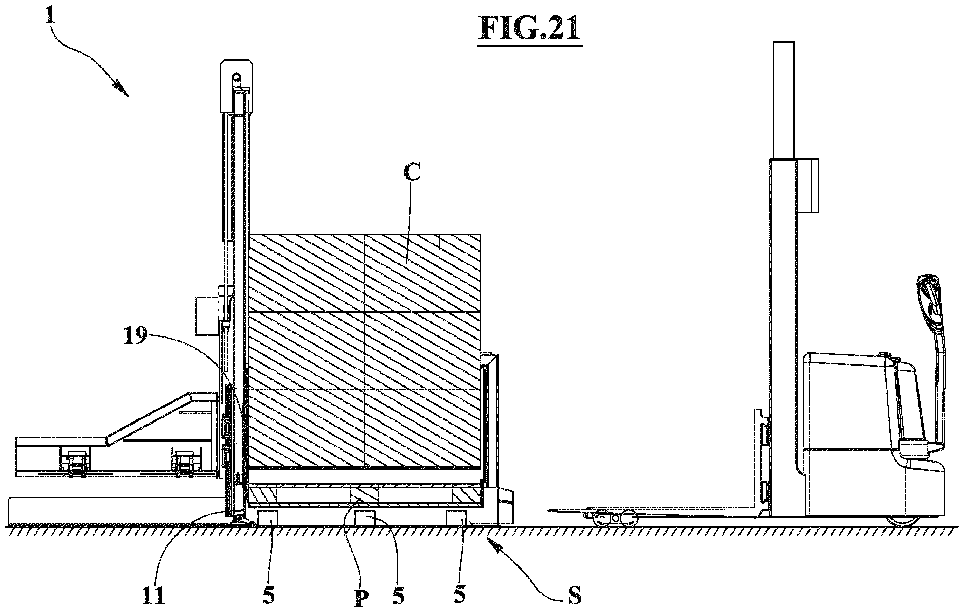

Figure 21: the forklift has placed the pallet to be replaced P on the two sets of support members 5 of the slide member 3 - even if a fictitious vertical distance is represented to better show such support members 5 - and such forklift has been moved away leaving this pallet to be replaced P facing the window 11 while the load C remains slightly raised thanks to the tightening by the side walls 20 and adhering to the bulkhead element 19 (said lifting of the load facilitates subsequent operations but, generally, is not is essential);

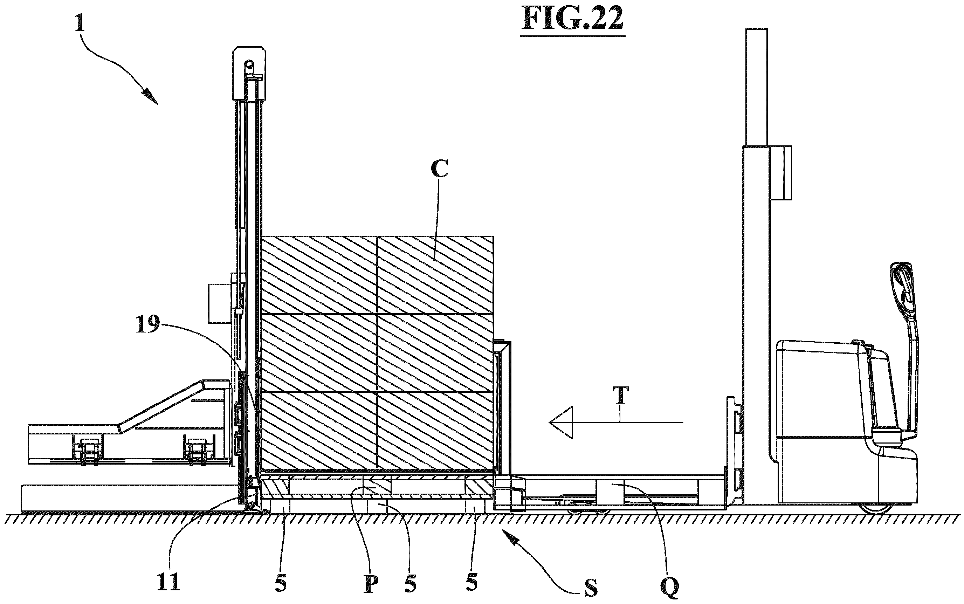

Figure 22: the forklift pushes the replacing pallet Q against the thinner or lower pallet to be replaced P which begins to translate while the load remains slightly raised, during this translation the support members 5 rotate progressively towards their retracted condition;

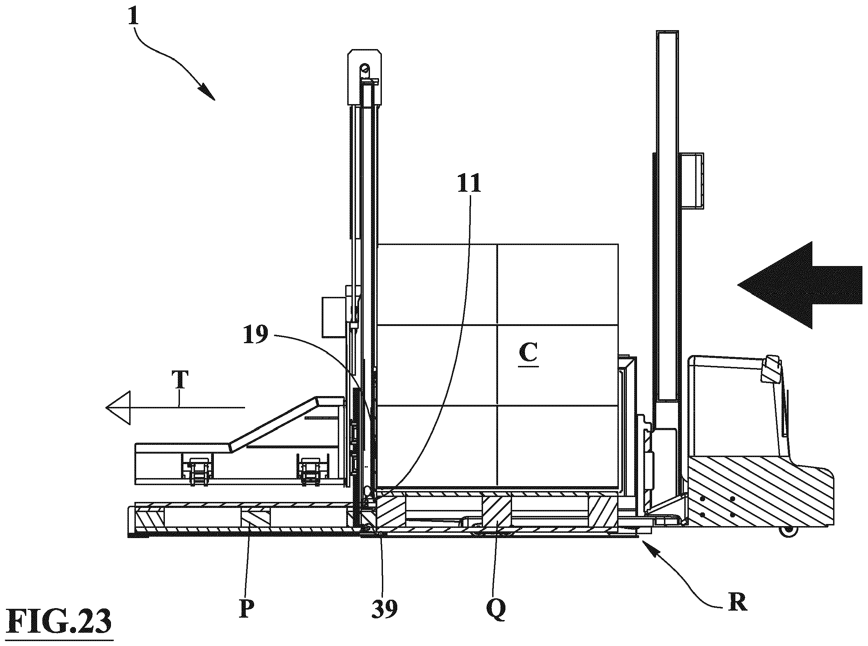

Figure 23: the forklift positioned the replacing pallet Q under load C and such replacing pallet Q pushed the pallet to be replaced P, almost completely through the window;

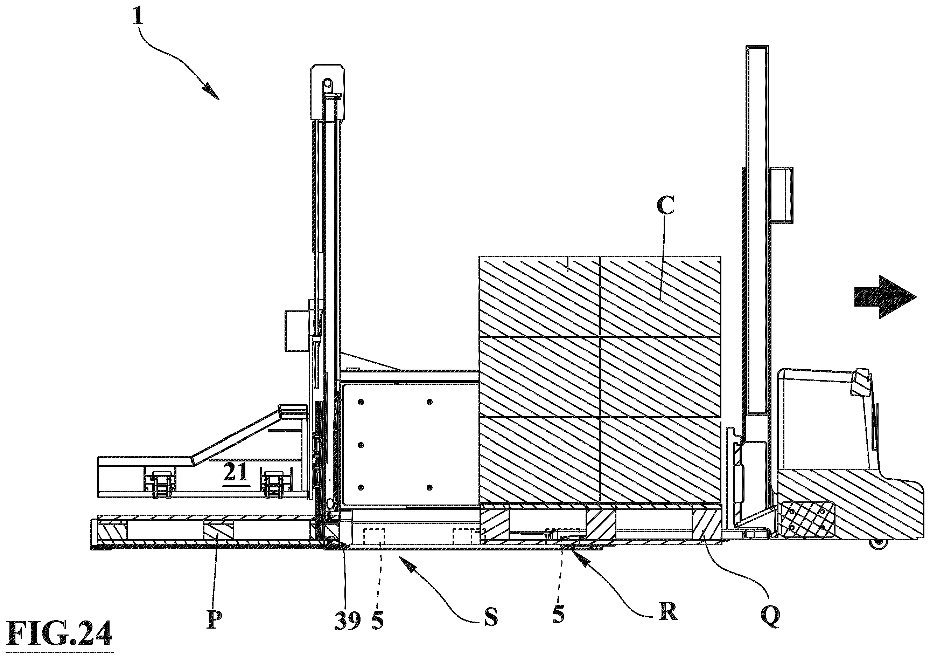

Figure 24: the pushers 17 have already reciprocally moved the side walls 20 apart, which have released the load C depositing it on the replacing pallet Q and the forklift has picked up and is removing the replacing pallet Q with the overlying load C and consequently the support members 5 rotate progressively towards their protruding condition S;

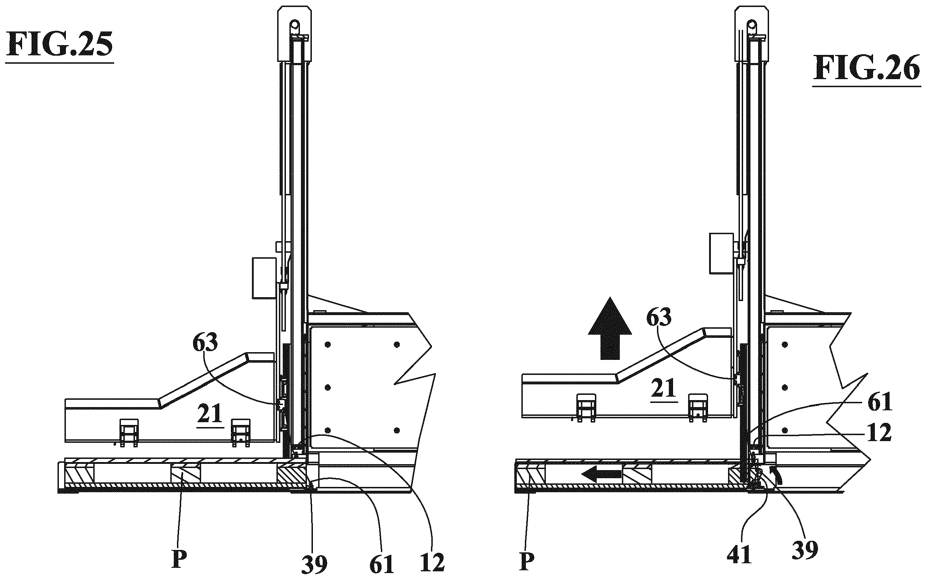

Figure 25: the forklift has moved the replacing pallet Q with the overlying load C and the pallet to be replaced P is in the same position of figure 23 that is with a lateral edge under the bulkhead element 19;
Figure 26: the bracket elements 21 are raised causing the tensioning and sliding of the respective pieces of chain 61 which being connected to the pushing bar 39 rotate it by moving it in the direction opposite to the device access, so that the pushing bar 39 acts on the pallet to be replaced P by translating it away from the window 11 until it is placed on the second surface SS between the bracket elements 21;

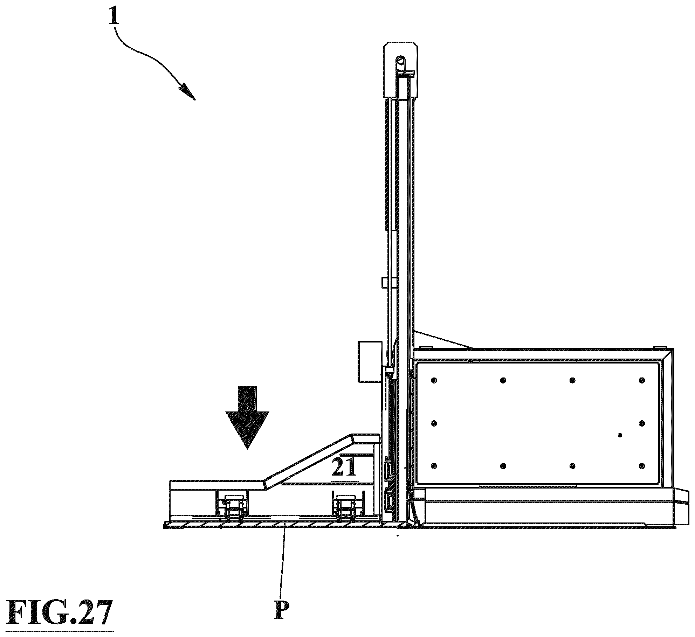

Figure 27: the bracket elements 21 are lowered side by side with the pallet to be replaced P now separated from the load, the pushing bar 39 returns to its initial lowered position;

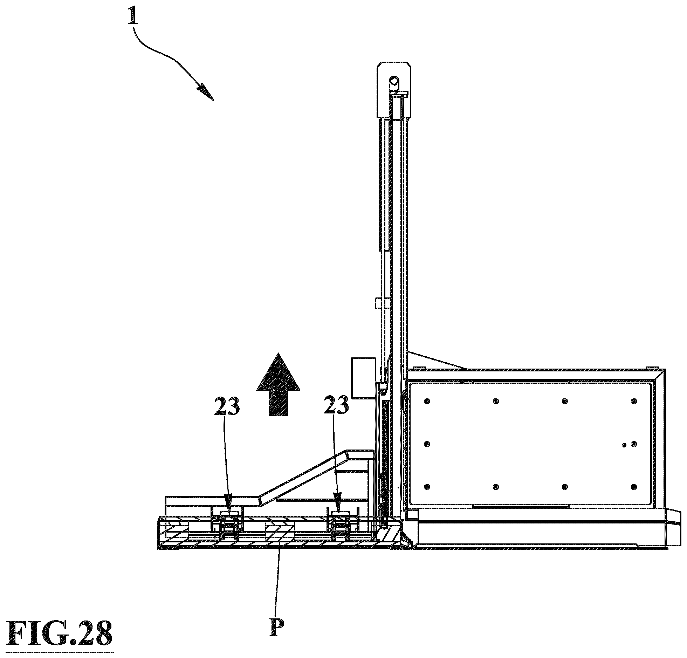

Figure 28: the hooking members 23 of the bracket elements 21 hook the lateral edges of the pallet to be replaced P;

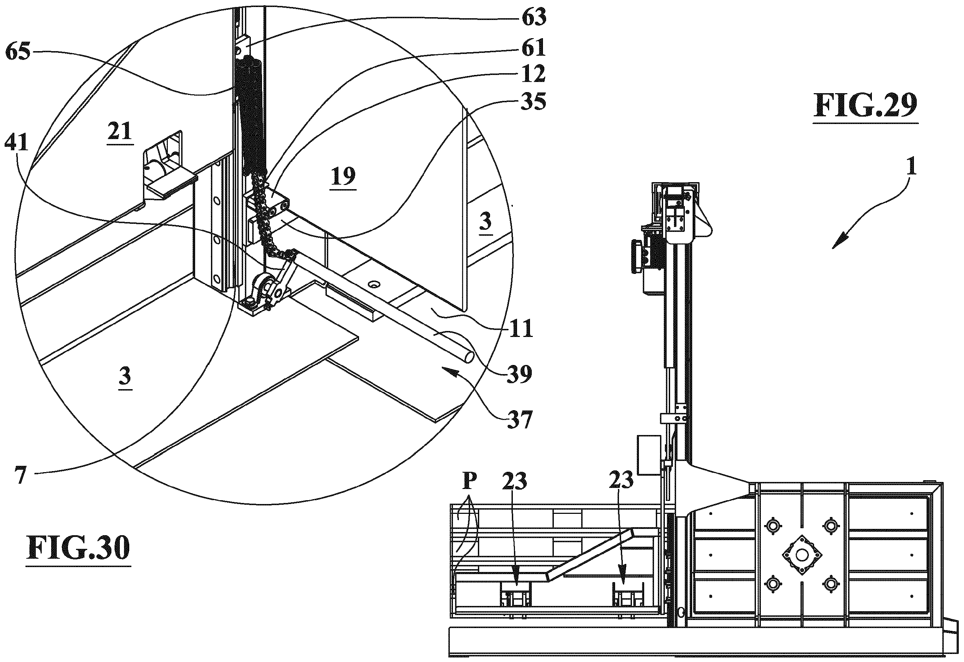

Figure 29: the device is in the phase following that of figure 28 after carrying out four cycles and the bracket elements 21 raise and support four pallets to be replaced P.

When the stack of pallets to be replaced P is complete, such stack can be taken and removed from the end of the device opposite its access end or, after the complete lifting of the bulkhead element 19, from the access end, as also described above.

It is important to note that the forward force which makes the pallets slide in the longitudinal forward direction T along the slide member 3 may be produced by means external to the device, such as said transport means which may consist, for example, of a lift truck or forklift or transpallet or similar known equipment. Alternatively or in addition, the invention provides the device to be equipped with its own pusher means assigned to generate forwarding force.

A variant of the device, showed in figure 30 and also referable to a basic embodiment consisting at least of the slide member, the portal element, the uprights, the bulkhead element, the window, the transversal pushing bar, the eccentric arms and the rotation actuator element from the transversal pushing bar, refers to an important solution that avoids the possible breakage of the rotation actuator element in some anomalous but possible conditions. Such variant provides that the rotation actuator element (which may be dedicated exclusively to the eccentric arm rotation or, as described below, may perform other functions) also includes a pair of elastic means 65, for example each consisting of a spring or a pair of helical springs interconnected with each other in a parallel manner, or a gas spring or similar. Each elastic means 65 is inserted along the motion transmission elements for the rotation of the corresponding eccentric arm 41; for example, each elastic means can be connected directly to the respective rotation actuator element, such as linear type, or may be inserted at any other point along the kinematics of the transmission elements of the drive transmission motion of the eccentric arm 41, between the rotation actuator element, of any type, and the corresponding eccentric arm.

In particular, and as shown in said figure 30, each elastic means 65 can be inserted between the end of the respective piece of chain 61 opposite the pushing bar 39, or opposite the corresponding eccentric arm 41 and the corresponding connection 63 fixed to the bracket elements 21 on the same side.

Alternatively, the end of each elastic means 65 opposite the respective piece of chain 61 can be connected to the first end 57 of the chain 55; or the elastic means can be interposed between the pushing bar 39 and the respective piece of chain 61. In normal operation the forces transmitted by the pieces of chain to the eccentric arms are insufficient to cause significant elongation of the elastic means 65 and therefore the pushing bar 39 can translate the pallet. If the pushing bar 39 or one of the eccentric arms 41 or both are blocked, e.g. due to a blocked pallet or any stuck object, the elastic means 65 elongates and prevents the pieces of chain from breaking.

As an alternative to the main embodiment, the invention also provides that the first end 57 of each chain 55 is not fixed to the respective bracket element 21 but to the elastic means or that the pieces of chain 61 or, alternatively, the corresponding tie rods, are operated by one or the respective actuators connected to such pieces of chain or tie rods by means of the respective elastic means 65.

A further variant provides that the pushing bar 39 is in two pieces each fixed to the respective eccentric arm 41 in a protruding and rigid or articulated ratchet tooth mode (also called pawl) to push the pallet in one direction and to allow it to pass into the other. The two pieces of the pushing bar 39, rigid or articulated, preferably consist of respective segments of the bar and mutually spaced apart and the respective eccentric arms 41 can be associated with respective springs, for example spiral or torsion bar, which keep such pushing bar segments elastically lowered in their lower position in the absence of the overwhelming lifting forces transmitted to them by the rotation actuator element.

## Claims

1. Device for replacing a pallet to be replaced and supporting a load with a replacing pallet with the possibility of keeping this pallet raised wherein it comprises a portal element (15) transversely placed at median portion of a slide member (3)
and **characterized in that** the portal element (15) is carrying a bulkhead element (19) transverse to the slide member (3) and raised or raiseable with respect to the latter forming a window (11) for the passage of the pallet to be replaced (P) where the slide member (3) is horizontal, is assigned for sliding pallets in a longitudinal sliding direction (T) and has a first surface (PS) for the load supported by the pallet; said device (1) comprises a plurality of support members (5) one end of each of which (5) is rotatably constrained to a respective rotation pin (7) perpendicularly fixed to said slide member (3) where such rotation pins (7) of the support members (5) are distributed on two respective geometric lines or bands parallel to the sliding direction (T) and placed one to, or on, one side of the first surface (PS) and the other placed to or on the opposite side of the first surface; each support member (5) can swing around the respective rotation pin at least between a protruding condition (S) in which it is perpendicular to the sliding direction (T) and protrudes above the first surface (PS) of the slide member (3) and a retracted condition (R) in which it is parallel to the sliding direction (T) and does not occupy said first surface (PS).

2. Device according to claim 1 **characterized in that** the portal element (15) is provided with a pair of uprights (12) spaced, vertical and fixed to respective and opposite sides of the median portion of the slide member (3) and connected to the bulkhead element (19) which separates the first surface (PS) from a second surface of the slide member (3).

3. Device according to claim 1 or 2 **characterized in that** the bulkhead element (19) is spaced vertically with respect to the slide member (3) to give the window (11) a height equal to or slightly higher than the height, evaluated from the slide member (3) plane, of the pallet to be replaced (P) directly placed on the slide member (3) or placed on the support members (5) in the protruding condition (S) where the maximum height of the support members (5) on the plane (3) corresponds to the difference in height between the pallets to be replaced and the replacing one.

4. Device according to any one of the preceding claims, **characterized in that** each rotation pin (7) is perpendicular to the slide member (3) and to the sliding direction (T) and is fixed to a plate or slab or lateral guide of the slide member (3).

5. Device according to claim 1 **characterized in that** each support member (5) in the retracted condition (R) is housed in a lower cavity of the slide member (3) and/or each support member (5) is provided with a respective elastic member (9) which transmits thereto an elastic force or couple directed towards the protruding condition (S) and/or each support member (5) is parallelepiped shaped and is made of a material with a low friction coefficient or at least its lower face has a layer of material with a low friction coefficient or rolling elements .

6. Device according to any of the preceding claims **characterized in that** the maximum height of the support members (5) on the slide member (3) is equal to or greater than the difference in the heights of the pallets to be replaced and the replacing one and/or said support members (5) are of the replaceable type to replace support members (5) having some height with others of different heights and the rotation pins (7) have stops for support members (5) of various heights.

7. Device according to claim 5 **characterized in that** the elastic member (9) of each support member (5) consists of a helical torsion spring associated with the respective rotation pin (7).

8. Device according to claim 2 or according to claim 2 and any one of claims 3-7 **characterized in that** it comprises a pair of side arms (16) connected to the uprights (12) of the at least one portal element (15) assigned to laterally support the load (C) or said side arms (16) have respective pushers (17) assigned to move corresponding vertical side walls (20), facing towards said first surface (PS), or exchange site, and parallel to said sliding direction (T) where these pushers (17) move the side walls (20) in mutual approach for blocking the load (C) at least during the replacement of the pallet to be replaced (P) with the replacing pallet (Q) and in mutual loosening to release the load at the end of said replacement and **characterized in that** it comprises an actuator means for raising and lowering each of said side arms (16) along the respective uprights (12) at least to allow the overlapping of two or more loads.

9. Device according to claim 2 or according to claim 2 and any one of claims 3-8 **characterized in that** it comprises two bracket elements (21), parallel to the sliding direction (T) and facing opposite direction to the first replacement surface (PS) and each connected to a respective upright (12) and sliding vertically along it by means of at least one lifting actuator element between a lower position, wherein said bracket element (21) matches the slidw member (3) or the floor, and a higher condition in which it is raised; each of these bracket elements (21) has at least one hooking member (23) assigned, in the downward end stroke of the respective slide member (3), to hook a respective side of a pallet to be replaced (P) arranged in a collecting site on a second surface (SS) of the slide member (3) opposite to the first surface with respect to the portal element (15) or at the side of the window (11) opposite to the first surface (PS); where each hooking member (23) comprises a body (27) rotatably pivoted to the respective bracket element (21) to rotate around an axis parallel to the sliding direction (T), this body (27) has a rod (29) which protrudes approximately in a radial direction from the body and is kept elastically protruding from the respective bracket element (21) by means of a resilient element (30) associated with said body (27) which furthermore comprises at least one protruding member (31) assigned to match the slide member (3) or the floor in the lower position of such bracket element (21) to rotate the body (27) placing the rod (29) inside its bracket element (21) profile.

10. Device according to claim 2 or according to claim 2 and any one of claims 3-9 **characterized in that** the vertical sides of the bulkhead element (19) are sliding along the uprights (12) and the bulkhead element (19) is operated by a lifting actuator element between a lower position, in which the lower edge of the bulkhead element (19) matches with stop elements (35) fixed to the uprights (12) and such lower edge delimits the upper side of the window (11) having its minimum height, and an upper position in which said bulkhead element lower edge is at a height higher than the height of a stack of pallets to be replaced (P) placed on the second surface (SS) allowing to a transport means placed at the first surface (PS) to pick up and to remove said stack from the same part and translation direction of insertion and withdrawal of the load supported respectively by the pallet to be replaced and by the replacing pallet.

11. Device according to claim 2 or according to claim 2 and any one of claims 3-10 **characterized in that** the two parallel lateral guides of the slide member (3) extend along the whole development of the slide member (3) and have respective sliding surfaces for the pallets, the median portion of each of these guides is fixed to the base of a respective upright (12) where these guides have respective transverse concave seats extending below said sliding surfaces, these transverse concave seats being adjacent and/or underlying the orthogonal projection of the bulkhead element (19) on the slide member (3) with respect to the longitudinal sliding direction (T).

12. Device according to claim 2 or according to claim 2 and any one of claims 3-11 **characterized in that** it comprises a pushing element (37) placed transversely to the base of the uprights (12) and comprising a transversal pushing bar (39) whose ends are fixed to eccentric arms (41) rotatable around respective pins mutually aligned transversely to the slide member (3) and operated by at least one rotation actuator element between a first extreme condition in which the pushing bar (39) does not interfere with the pallets translation and a second extreme condition in which it is on the second surface (SS) spaced from the window (11) where in the passage between these first and second conditions the pushing element (37) pushes an edge of the pallet to be replaced (P) from the slide member (3) side of the replacement first surface (PS) to the side of the collection second surface (SS); said pushing bar (39) of said pushing element (37) is monolithic or in two separate and distinct parts, where one end of each part is fixed to the respective eccentric arm (41) in a rigid or articulated way in the form of a ratchet tooth to push the pallet into one direction and to allow it to pass into the other.

13. Device according to claim 9 **characterized in that** the lifting actuator element for sliding the two bracket elements (21) along the respective uprights (12) comprises a motorized shaft (51) rotatably connected to the portal element (15) upper portion perpendicular to the uprights (12) and to the longitudinal sliding direction (T), and carrying two ring gears (53) each having a respective chain (55) a first end of which (57) is fixed to the respective bracket element (21) for translating these bracket elements (21) between the lower position in which they matches the slide member (3) or the floor and hook a pallet (P) and a raised position in which they lift a stack of pallets (P) allowing the translation of an further underlying pallet (P).

14. Device according to claim 10 **characterized in that** the lifting actuator element for sliding the bulkhead element (19) along the respective uprights (12) comprises a motorized shaft (51) rotatably connected to the portal element (15) upper portion perpendicular to the uprights (12) and to the sliding direction (T) and carrying two ring gears (53) each having a respective chain (55) a second end of which (59) is fixed to the upper portion of the element bulkhead (19) to raise and lower it.

15. Device according to claims 12 and 13 **characterized in that** the rotation actuator element comprises at least one respective piece of chain (61) having one end fixed to a corresponding end of the pushing bar (39) or of the corresponding eccentric arm (41) and the other end connected to the first end (57) of the chain (55) directly or by means of a connection (63) fixed to the bracket element (21) of the same side.

16. Device according to claims 12 and 15 **characterized in that** it comprises at least one piece of chain (61) or at least one tie rod or connection having one end fixed to the pushing bar (39) or to the corresponding eccentric arm (41) and the other end fixed to one end of a respective elastic means (65) whose opposite end is connected to the rotation actuator element; where the elastic means (65) end connected to the rotation actuator element is connected to a respective chain (55) engaged by a ring gear (53) driven by a motorized shaft (51) where such chain (55), ring gear (53) and motorized shaft (51) act at least as a rotation actuator element.

## Patentansprüche

1. Vorrichtung zum Ersetzen einer zu ersetzenden Palette und zum Unterstützen einer Ladung mit einer Ersatzpalette mit der Möglichkeit, diese Palette erhöht zu halten, wobei sie ein Portalelement (15) aufweist, das schräg an dem mittleren Bereich eines Schieberteils (3) angeordnet ist und ist **dadurch gekennzeichnet, dass** das Portalelement (15) ein Stütz- oder Trennelement (19) schräg zu dem Schieberteil (3) trägt und bezogen auf Letzteres erhöht ist oder erhöht werden kann, wobei ein Fenster (11) für den Durchlass der zu ersetzenden Palette (P) zu bilden wobei das Schieberteil (3) horizontal angeordnet ist, und zugeordnet ist, um Paletten in einer längsverlaufenden Schubrichtung (T) zu schieben und eine erste Oberfläche (PS) für die durch die Palette unterstützte Ladung aufweist; die Vorrichtung (1) weist eine Mehrzahl Stützteile (5) auf, von denen (5) jeweils ein Ende beschränkt drehbar ist auf einen entsprechenden Drehstift (7), der senkrecht an dem Schieberteil (3) befestigt ist, wo derartige Drehstifte (7) der Stützteile (5) auf zwei entsprechenden geometrischen Linien oder Streifen parallel zu der Schubrichtung (T) verteilt sind und eines an oder auf einer Seite der ersten Oberfläche (PS) angeordnet ist und das andere an oder auf der gegenüberliegenden Seite der ersten Oberfläche angeordnet ist; jedes Stützteil (5) kann um den entsprechenden Drehstift schwingen mindestens zwischen einem vorspringenden Zustand (S), in dem er senkrecht zu der Schubrichtung (T) ist und über die erste Oberfläche (PS) des Schieberteils (3) vorspringt, und einem zurückgezogenen Zustand (R), in dem er parallel zu der Schubrichtung (T) ist, und die erste Oberfläche (PS) nicht besetzt.

2. Vorrichtung gemäß Anspruch 1, **dadurch gekennzeichnet, dass** das Portalelement (15) mit einem Paar Ständer (12) versehen ist, die beabstandet und vertikal angeordnet sind sowie an entsprechenden und gegenüberliegenden Seiten des mittleren Bereichs des Schieberteils (3) befestigt sind und mit dem Trennelement (19) verbunden sind, das die erste Oberfläche (PS) von einer zweiten Oberfläche des Schieberteils (3) trennt.

3. Vorrichtung gemäß Anspruch 1 oder 2, **dadurch gekennzeichnet, dass** das Trennelement (19) vertikal bezogen auf das Schieberteil (3) beabstandet angeordnet ist um dem Fenster (11) eine Höhe zu geben, die gleich oder geringfügig höher ist als die Höhe, von der Ebene des Schieberteils (3) gesehen, der zu ersetzenden Palette (P) die direkt auf dem Schieberteil (3) angeordnet ist oder auf den Stützteilen (5) in dem vorspringenden Zustand angeordnet ist, wo die maximale Höhe der Stützteile (5) auf der Ebene (3) dem Höhenunterschied zwischen der zu ersetzenden Palette und der, die ersetzt, entspricht.

4. Vorrichtung gemäß einem der vorstehenden Ansprüche, **dadurch gekennzeichnet, dass** jeder Drehstift (7) senkrecht zu dem Schieberteil (3) und zu der Schubrichtung (T) angeordnet ist und an einer Platte oder Tafel oder seitlichen Führung des Schieberteils (3) befestigt ist.

5. Vorrichtung gemäß Anspruch 1, **dadurch gekennzeichnet, dass** jedes Stützteil (5) in dem zurückgezogenen Zustand (R) in einem unteren Hohlraum des Schieberteils (3) untergebracht ist und/oder jedes Stützteil (5) ist mit einem entsprechenden elastischen Teil (9) versehen, der eine elastische Kraft oder Kraftpaar dort hin überträgt, die in Richtung des vorspringenden Zustands (S) gerichtet ist und/oder jedes Stützteil (5) ist parallelflach geformt und ist aus einem Material mit einem niedrigen Reibungskoeffizienten hergestellt oder zumindest seine untere Fläche weist eine Materialschicht mit einem niedrigen Reibungskoeffizienten oder Rollelementen auf.

6. Vorrichtung gemäß einem der vorstehenden Ansprüche, **dadurch gekennzeichnet, dass** die Maximalhöhe der Stützteile (5) auf dem Schieberteil (3) gleich ist wie oder größer ist als der Unterschied der Höhen der zu ersetzenden Palette und der Palette, die ersetzt ist und/oder die Stützteile (5) von der ersetzbaren Art sind um Stützteile (5) zu ersetzen, die irgendeine Höhe mit anderen unterschiedlicher Höhen aufweisen und die Drehstifte (7) weisen Anschläge für Stützteile (5) verschiedener Höhen auf.

7. Vorrichtung gemäß Anspruch 5, **dadurch gekennzeichnet, dass** das elastische Teil (9) jedes Stützteils (5) aus einer spiralförmigen Torsionsfeder besteht, die mit dem entsprechenden Drehstift (7) in Verbindung steht.

8. Vorrichtung gemäß Anspruch 2 oder gemäß Anspruch 2 und einem der Ansprüche 3-7, **dadurch gekennzeichnet, dass** sie ein Paar Seitenarme (16) umfasst, die mit den Ständern (12) des mindestens einen Portalelements (15) verbunden sind, die zugeordnet sind, um die Ladung (C) seitlich zu unterstützen oder die Seitenarme (16) weisen entsprechende Schieber (17) auf, die zugeordnet sind, um entsprechende vertikale Seitenwände (20) zu bewegen, die der ersten Oberfläche (PS), oder dem Austauschort, zugewandt sind und parallel zu der Schubrichtung (T), wo diese Schieber (17) die Seitenwände (20) unter gegenseitiger Annäherung bewegen, um die Ladung (C) zumindest während des Ersetzens der mit der Ersatzpalette (Q) zu ersetzenden Palette (P) zu blockieren und unter gegenseitigem Lösen um die Ladung am Schluss dieses Ersetzens freizugeben, und ist **dadurch gekennzeichnet, dass** die Vorrichtung ein Betätigungsmittel umfasst, um jeden der Seitenarme (16) entlang der entsprechenden Ständer (12) anzuheben und abzusenken, um wenigstens das Überlappen von zwei oder mehreren Ladungen zuzulassen.

9. Vorrichtung gemäß Anspruch 2 oder gemäß Anspruch 2 und einem der Ansprüche 3-8, **dadurch gekennzeichnet, dass** sie zwei Klammerelemente (21) umfasst, die parallel zu der Schubrichtung (T) angeordnet sind und der ersten Ersatzoberfläche (PS) in entgegengesetzter Richtung zugewandt sind, und jedes ist mit einem entsprechenden Ständer (12) verbunden und gleitet mittels mindestens eines anhebenden Betätigungselements vertikal daran entlang zwischen einer unteren Position, wobei das Klammerelement (21) zu dem Schieberteil (3) oder dem Boden passt, und einem höheren Zustand in dem es angehoben ist; jedes dieser Klammerelemente (21) weist mindestens ein Hakenelement (23) auf, das in dem stromabwärtigen Endhub des entsprechenden Schieberteils (3) zugeordnet ist, um in eine entsprechende Seite einer zu ersetzenden Palette (P) einzuhaken, die in einer Sammelstelle auf einer zweiten Oberfläche (SS) des Schieberteils (3) gegenüber der ersten Oberfläche bezogen auf das Portalelement (15) oder an der Seite des Fensters (11) gegenüber der ersten Oberfläche (PS) angeordnet ist; bei dem jedes Hakenelement (23) einen Körper (27) aufweist, der drehbar bezogen auf das entsprechenden Klammerelement (21) schwenkt, um parallel zu der Schubrichtung (T) um eine Achse zu drehen, dieser Körper (27) weist eine Stange (29) auf, die in einer ungefähr radialen Richtung von dem Körper vorsteht und mittels eines dem Körper zugeordneten nachgebenden Elements (30) von dem entsprechenden Klammerelement (21) elastisch vorspringend gehalten ist, wobei der Körper (27) des Weiteren mindestens ein vorspringendes Element (31) aufweist, das zugeordnet ist, um zu dem Schieberteil (3) oder dem Boden in der unteren Position eines solchen Klammerelements (21) zu passen, um den Körper (27) zu drehen, wodurch die Stange (29) im Innern des Profils sein Klammerelements (21) angeordnet ist.

10. Vorrichtung gemäß Anspruch 2 oder gemäß Anspruch 2 und einem der Ansprüche 3-9, **dadurch gekennzeichnet, dass** die vertikalen Seiten des Trennelements (19) entlang der Ständer (12) gleiten und das Trennelement (19) wird betrieben durch ein anhebendes Betätigungselement zwischen einer unteren Position, in der die untere Kante des Trennelements (19) zu Anschlagelementen (35) passt, die an den Ständern (12) befestigt sind und derartige untere Kanten grenzen die obere Seite des Fensters (11) ab, das seine Mindesthöhe aufweist, und einer oberen Position in der die untere Kante des Trennelements auf einer Höhe liegt, die höher ist als die Höhe eines zu ersetzenden Palettenstapels (P) der auf der zweiten Oberfläche (SS) positioniert ist, was es einem Transportmittel, das auf der ersten Oberfläche (PS) angeordnet ist, ermöglicht, den Stapel von dem gleichen Teil und der EinsetzÜberführungsrichtung aufzunehmen und zu entfernen und die Ladung zu entnehmen, die von der zu ersetzenden Palette bzw. der Ersatzpalette getragen wird.

11. Vorrichtung gemäß Anspruch 2 oder gemäß Anspruch 2 und einem der Ansprüche 3-10, **dadurch gekennzeichnet, dass** sich die zwei parallelen seitlichen Führungen des Schieberteils (3) entlang der gesamten Ausdehnung des Schieberteils (3) erstrecken und entsprechende Gleitoberflächen für die Paletten aufweisen, der mittlere Bereich jeder dieser Führungen ist an der Basis eines entsprechenden Ständers (12) befestigt, wo diese Führungen entsprechende schräge konkave Sitze aufweisen, die sich unterhalb der Gleitoberflächen erstrecken, wobei diese schrägen konkaven Sitze bezogen auf die längliche Schubrichtung (T) an den rechtwinkligen Vorsprung des Trennelements (19) an dem Schieberteil (3) angrenzen und/oder darunterliegen.

12. Vorrichtung gemäß Anspruch 2 oder gemäß Anspruch 2 und einem der Ansprüche 3-11, **dadurch gekennzeichnet, dass** sie ein Stoßelement (37) umfasst, das schräg zu der Basis der Ständer (12) angeordnet ist und eine schräge Stoßstange (39) umfasst, deren Enden an um entsprechende Stifte drehenden exzentrischen Armen (41) befestigt sind, die wechselseitig schräg zu dem Schieberteil (3) ausgerichtet sind und mittels mindestens eines Drehbetätigungselement betätigt werden zwischen einem ersten Extremzustand, in dem die Stoßstange (39) nicht in die Palettenübertragung eingreift und einem zweiten Extremzustand, in dem sie sich von dem Fenster (11) beabstandet auf der zweiten Oberfläche (SS) befindet, wo in dem Übergang zwischen diesem ersten und zweiten Zustand das Stoßelement (37) eine Kante der zu ersetzenden Palette (P) von der Seite des Schieberteils (3) der ersetzenden ersten Oberfläche (PS) zu der Seite der sammelnden zweiten Oberfläche drückt; wobei die Stoßstange (39) des Stoßelements (37) einstückig oder in zwei getrennten und eigenständigen Teilen vorliegt, wo ein Ende jedes Teils starr oder mit Gelenk in Form eines Sperrzahns an dem entsprechenden exzentrischen Arm (41) befestigt ist, um die Palette in eine Richtung zu drücken und zuzulassen, dass sie in die andere übergeht.

13. Vorrichtung gemäß Anspruch 9, **dadurch gekennzeichnet, dass** das hebende Betätigungselement zum Schieben der zwei Klammerelemente (21) entlang der entsprechenden Ständer (12) einen motorisierten Schaft (51) umfasst, der drehbar mit dem oberen Bereich des Portalelements (15) senkrecht zu dem Ständer (12) und zu der längsverlaufenden Schubrichtung (T) verbunden ist und zwei Tellerräder oder Ringräder (53) trägt, die jeweils eine entsprechende Kette (55) aufweisen, deren erstes Ende (57) an dem entsprechenden Klammerelement (21) befestigt ist, um diese Klammerelemente (21) zu verschieben zwischen der unteren Position, in der sie zu dem Schieberteil (3) oder dem Boden passen und in eine Palette (P) einhaken, und einer erhöhten Position in der sie einen Stapel Paletten (P) anheben, wodurch die Verschiebung einer weiteren darunterliegenden Palette (P) ermöglicht wird.

14. Vorrichtung gemäß Anspruch 10, **dadurch gekennzeichnet, dass** das anhebende Betätigungselement zum Schieben des Trennelements (19) entlang der entsprechenden Ständer (12) einen motorisierten Schaft (51) umfasst, der drehbar mit dem oberen Bereich des Portalelements (15) senkrecht zu den Ständern (12) und zu der Schubrichtung (T) verbunden ist und zwei Ringräder (53) trägt, die jeweils eine entsprechende Kette (55) aufweisen, deren zweites Ende (59) an dem oberen Bereich des Trennelements (19) befestigt ist, um es anzuheben und abzusenken.

15. Vorrichtung gemäß den Ansprüchen 12 und 13, **dadurch gekennzeichnet, dass** das Drehbetätigungselement mindestens ein entsprechendes Stück Kette (16) aufweist, deren erstes Ende an einem entsprechenden Ende der Stoßstange (39) oder des entsprechenden exzentrischen Arms (41) befestigt ist und das andere Ende ist direkt oder mittels einer Verbindung (63), die an dem Klammerelement (21) der gleichen Seite befestigt ist, mit dem ersten Ende (57) der Kette (55) verbunden.

16. Vorrichtung gemäß den Ansprüchen 12 und 15, **dadurch gekennzeichnet, dass** sie mindestens ein Stück Kette (61) oder mindestens eine Zugstange oder Verbindung aufweist, die ein Ende umfasst, das an der Stoßstange (39) oder dem entsprechenden exzentrischen Arm (41) befestigt ist und das andere Ende ist an einem Ende eines entsprechenden elastischen Mittels (65) befestigt, dessen gegenüberliegendes Ende mit dem Drehbetätigungselement verbunden ist; wo das Ende des elastischen Mittels (65), das mit dem Drehbetätigungselement verbunden ist, mit einer entsprechenden Kette (55) verbunden ist, in die ein Ringrad (53) eingreift, das durch einen motorisierten Schaft (51) angetrieben wird, wo eine solche Kette (55), Ringrad (53) und motorisierter Schaft (51) zumindest als ein Drehbetätigungselement agieren.

## Revendications

1. - Dispositif pour remplacer une palette à remplacer et supportant une charge avec une palette de remplacement avec la possibilité de maintenir cette palette surélevée, comprenant un élément portique (15) placé transversalement à une partie médiane d'un élément glissière (3), et **caractérisé par le fait que** l'élément portique (15) porte un élément cloison (19) transversal à l'élément glissière (3) et surélevé ou apte à être surélevé par rapport à ce dernier en formant une fenêtre (11) pour le passage de la palette à remplacer (P) où l'élément glissière (3) est horizontal, est affecté au coulissement de palettes dans une direction de coulissement longitudinale (T) et a une première surface (PS) pour la charge supportée par la palette ; ledit dispositif (1) comprend une pluralité d'éléments de support (5) dont une extrémité de chacun (5) est contrainte en rotation à une broche de rotation respective (7) fixée perpendiculairement audit élément glissière (3) où lesdites broches de rotation (7) des éléments de support (5) sont réparties sur deux lignes ou bandes géométriques respectives parallèles à la direction de coulissement (T) et l'une placée vers, ou sur, un côté de la première surface (PS) et l'autre placée vers ou sur le côté opposé de la première surface ; chaque élément de support (5) peut pivoter autour de la broche de rotation respective au moins entre un état en saillie (S) dans lequel il est perpendiculaire à la direction de coulissement (T) et fait saillie au-dessus de la première surface (PS) de l'élément glissière (3) et un état rétracté (R) dans lequel il est parallèle à la direction de coulissement (T) et n'occupe pas ladite première surface (PS) .

2. - Dispositif selon la revendication 1, **caractérisé par le fait que** l'élément portique (15) comporte une paire de montants (12) espacés, verticaux et fixés à des côtés respectifs et opposés de la partie médiane de l'élément glissière (3) et reliés à l'élément cloison (19) qui sépare la première surface (PS) d'une seconde surface de l'élément glissière (3).

3. - Dispositif selon la revendication 1 ou 2, **caractérisé par le fait que** l'élément cloison (19) est espacé verticalement par rapport à l'élément glissière (3) pour donner à la fenêtre (11) une hauteur égale ou légèrement supérieure à la hauteur, évaluée à partir du plan de l'élément glissière (3), de la palette à remplacer (P) directement placée sur l'élément glissière (3) ou placée sur les éléments de support (5) dans l'état en saillie (S) où la hauteur maximale des éléments de support (5) sur le plan (3) correspond à la différence de hauteur entre les palettes à remplacer et celle de remplacement.

4. - Dispositif selon l'une quelconque des revendications précédentes, **caractérisé par le fait que** chaque broche de rotation (7) est perpendiculaire à l'élément glissière (3) et à la direction de coulissement (T) et est fixée à une plaque ou une dalle ou un guide latéral de l'élément glissière (3).

5. - Dispositif selon la revendication 1, **caractérisé par le fait que** chaque élément de support (5) dans l'état rétracté (R) est reçu dans une cavité inférieure de l'élément glissière (3) et/ou chaque élément de support (5) comporte un élément élastique respectif (9) qui lui transmet une force ou un couple élastique dirigé vers l'état en saillie (S), et/ou chaque élément de support (5) est de forme parallélépipédique et est fait d'un matériau à faible coefficient de frottement ou au moins sa face inférieure a une couche de matériau à faible coefficient de frottement ou des éléments roulants.

6. - Dispositif selon l'une quelconque des revendications précédentes, **caractérisé par le fait que** la hauteur maximale des éléments de support (5) sur l'élément glissière (3) est égale ou supérieure à la différence entre les hauteurs des palettes à remplacer et celle de remplacement, et/ou lesdits éléments de support (5) sont du type remplaçable pour remplacer des éléments de support (5) ayant une certaine hauteur par d'autres de hauteurs différentes et les broches de rotation (7) ont des butées pour des éléments de support (5) de diverses hauteurs.

7. - Dispositif selon l'une quelconque des revendications précédentes, **caractérisé par le fait que** l'élément élastique (9) de chaque élément de support (5) est constitué d'un ressort de torsion hélicoïdal associé à la broche de rotation respective (7).

8. - Dispositif selon la revendication 2 ou selon la revendication 2 et l'une quelconque des revendications 3 à 7, **caractérisé par le fait qu'**il comprend une paire de bras latéraux (16) reliés aux montants (12) de l'au moins un élément portique (15) affecté au support latéral de la charge (C) ou lesdits bras latéraux (16) ont des poussoirs respectifs (17) affectés au déplacement de parois latérales verticales correspondantes (20), faisant face à ladite première surface (PS), ou site d'échange, et parallèlement à ladite direction de coulissement (T) où ces poussoirs (17) déplacent les parois latérales (20) en rapprochement mutuel pour bloquer la charge (C) au moins pendant le remplacement de la palette à remplacer (P) par la palette de remplacement (Q) et en desserrage mutuel pour libérer la charge à la fin dudit remplacement, et **caractérisé par le fait qu'**il comprend un moyen actionneur pour surélever et abaisser chacun desdits bras latéraux (16) le long des montants respectifs (12) au moins pour permettre le chevauchement de deux charges ou plus.

9. - Dispositif selon la revendication 2 ou selon la revendication 2 et l'une quelconque des revendications 3 à 8, **caractérisé par le fait qu'**il comprend deux éléments d'appui (21), parallèles à la direction de coulissement (T) et faisant face à la direction opposée à la première surface de remplacement (PS) et reliés chacun à un montant respectif (12) et coulissant verticalement le long de celui-ci au moyen d'au moins un élément actionneur de levage entre une position inférieure, dans laquelle ledit élément d'appui (21) est mis en correspondance avec l'élément glissière (3) ou le sol, et une position supérieure dans laquelle il est surélevé ; chacun de ces éléments d'appui (21) a au moins un élément d'accrochage (23) affecté, dans la course d'extrémité descendante de l'élément glissière respectif (3), à l'accrochage d'un côté respectif d'une palette à remplacer (P) disposée dans un site de collecte sur une seconde surface (SS) de l'élément glissière (3) opposée à la première surface par rapport à l'élément portique (15) ou sur le côté de la fenêtre (11) opposé à la première surface (PS) ; chaque élément d'accrochage (23) comprend un corps (27) articulé à pivotement sur l'élément d'appui respectif (21) pour tourner autour d'un axe parallèle à la direction de coulissement (T), ce corps (27) a une tige (29) qui fait saillie approximativement dans une direction radiale à partir du corps et est maintenue élastiquement en saillie à partir de l'élément d'appui respectif (21) au moyen d'un élément élastique (30) associé audit corps (27) qui comprend en outre au moins un élément en saillie (31) affecté à la mise en correspondance avec l'élément glissière (3) ou le sol dans la position inférieure de cet élément d'appui (21) pour faire tourner le corps (27) en plaçant la tige (29) à l'intérieur du profil de son élément d'appui (21).

10. - Dispositif selon la revendication 2 ou selon la revendication 2 et l'une quelconque des revendications 3 à 9, **caractérisé par le fait que** les côtés verticaux de l'élément cloison (19) coulissent le long des montants (12) et l'élément cloison (19) est actionné par un élément actionneur de levage entre une position inférieure, dans laquelle le bord inférieur de l'élément cloison (19) est mis en correspondance avec des éléments de butée (35) fixés aux montants (12) et ledit bord inférieur délimite le côté supérieur de la fenêtre (11) ayant sa hauteur minimale, et une position supérieure dans laquelle ledit bord inférieur de l'élément cloison est à une hauteur supérieure à la hauteur d'une pile de palettes à remplacer (P) placées sur la seconde surface (SS) permettant à un moyen de transport placé à la première surface (PS) de prendre et d'enlever ladite pile à partir de la même partie et une direction de translation d'introduction et de retrait de la charge supportée respectivement par la palette à remplacer et par la palette de remplacement.

11. - Dispositif selon la revendication 2 ou selon la revendication 2 et l'une quelconque des revendications 3 à 10, **caractérisé par le fait que** les deux guides latéraux parallèles de l'élément glissière (3) s'étendent sur tout le développement de l'élément glissière (3) et ont des surfaces de coulissement respectives pour les palettes, la partie médiane de chacun de ces guides est fixée à la base d'un montant respectif (12) où ces guides ont des sièges concaves transversaux respectifs s'étendant au-dessous desdites surfaces de coulissement, ces sièges concaves transversaux étant adjacents et/ou sous-jacents à la projection orthogonale de l'élément cloison (19) sur l'élément glissière (3) par rapport à la direction de coulissement longitudinale (T).

12. - Dispositif selon la revendication 2 ou selon la revendication 2 et l'une quelconque des revendications 3 à 11, **caractérisé par le fait qu'**il comprend un élément de poussée (37) placé transversalement à la base des montants (12) et comprenant une barre de poussée transversale (39) dont les extrémités sont fixées à des bras excentriques (41) aptes à tourner autour de broches respectives mutuellement alignées transversalement à l'élément glissière (3) et actionnés par au moins un élément actionneur de rotation entre un premier état extrême dans lequel la barre de poussée (39) n'interfère pas avec la translation de palettes et un second état extrême dans lequel elle se trouve sur la seconde surface (SS) espacée de la fenêtre (11) où, dans le passage entre ces premier et second états, l'élément de poussée (37) pousse un bord de la palette à remplacer (P) du côté élément glissière (3) de la première surface de remplacement (PS) au côté de la seconde surface de collecte (SS) ; ladite barre de poussée (39) dudit élément de poussée (37) est monolithique ou en deux parties séparées et distinctes, où une extrémité de chaque partie est fixée au bras excentrique respectif (41) d'une manière rigide ou articulée sous la forme d'une dent triangulaire pour pousser la palette dans une direction et lui permettre de passer dans l'autre.

13. - Dispositif selon la revendication 9, **caractérisé par le fait que** l'élément actionneur de levage pour faire coulisser les deux éléments d'appui (21) le long des montants respectifs (12) comprend un arbre motorisé (51) relié de manière rotative à la partie supérieure de l'élément portique (15) perpendiculairement aux montants (12) et à la direction de coulissement longitudinale (T), et portant deux couronnes dentées (53) ayant chacune une chaîne respective (55) dont une première extrémité (57) est fixée à l'élément d'appui respectif (21) pour déplacer en translation ces éléments d'appui (21) entre la position inférieure, dans laquelle ils sont mis en correspondance avec l'élément glissière (3) ou le sol et accrochent une palette (P), et une position surélevée dans laquelle ils lèvent une pile de palettes (P) permettant la translation d'une autre palette sous-jacente (P).

14. - Dispositif selon la revendication 10, **caractérisé par le fait que** l'élément actionneur de levage pour faire coulisser l'élément cloison (19) le long des montants respectifs (12) comprend un arbre motorisé (51) relié de manière rotative à la partie supérieure de l'élément portique (15) perpendiculairement aux montants (12) et à la direction de coulissement (T) et portant deux couronnes dentées (53) ayant chacune une chaîne respective (55) dont une seconde extrémité (59) est fixée à la partie supérieure de l'élément cloison (19) pour le lever et l'abaisser.

15. - Dispositif selon les revendications 12 et 13, **caractérisé par le fait que** l'élément actionneur de rotation comprend au moins un morceau respectif de chaîne (61) ayant une extrémité fixée à une extrémité correspondante de la barre de poussée (39) ou du bras excentrique correspondant (41) et l'autre extrémité reliée à la première extrémité (57) de la chaîne (55) directement ou au moyen d'une liaison (63) fixée à l'élément d'appui (21) du même côté.

16. - Dispositif selon les revendications 12 et 15, **caractérisé par le fait qu'**il comprend au moins un morceau de chaîne (61) ou au moins un tirant ou une liaison ayant une extrémité fixée à la barre de poussée (39) ou au bras excentrique correspondant (41) et l'autre extrémité fixée à une extrémité d'un moyen élastique respectif (65) dont l'extrémité opposée est reliée à l'élément actionneur de rotation ; l'extrémité du moyen élastique (65) reliée à l'élément actionneur de rotation est reliée à une chaîne respective (55) engagée avec une couronne dentée (53) entraînée par un arbre motorisé (51) où ladite chaîne (55), ladite couronne dentée (53) et ledit arbre motorisé (51) agissent au moins comme élément actionneur de rotation.
